(19) Europäisches Patentamt / European Patent Office / Office européen des brevets

(11) **EP 2 813 583 A1**

(12) **EUROPEAN PATENT APPLICATION**
published in accordance with Art. 153(4) EPC

(43) Date of publication:
**17.12.2014 Bulletin 2014/51**

(21) Application number: **13746682.7**

(22) Date of filing: **05.02.2013**

(51) Int Cl.:
*C21B 13/08* (2006.01)  *C22B 1/16* (2006.01)
*C22B 1/244* (2006.01)  *C22B 1/248* (2006.01)
*F27B 7/02* (2006.01)  *F27B 7/08* (2006.01)
*F27B 7/10* (2006.01)  *F27B 7/34* (2006.01)
*F27B 7/36* (2006.01)

(86) International application number:
**PCT/JP2013/052615**

(87) International publication number:
**WO 2013/118725 (15.08.2013 Gazette 2013/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.02.2012 JP 2012027293**

(71) Applicant: **Tetsugen Corporation
Tokyo 102-8142 (JP)**

(72) Inventors:
• **UEKAWA, Seita
  Tokyo 102-8142 (JP)**
• **NABEKURA, Kazunori
  Kimitsu-shi
  Chiba 299-1141 (JP)**

(74) Representative: **Vossius & Partner
Siebertstrasse 4
81675 München (DE)**

(54) **METHOD AND DEVICE FOR PRODUCING REDUCED IRON**

(57) The present invention relates to a method and apparatus for producing reduced iron from ironmaking dust which contains iron oxide which is generated at an ironmaking plant, takes note of the rotary kiln reduction method which does not require pretreatment of the dust, and has as its problem the pursuit of facilities which achieve further improvement of heat efficiency and stable operation.

To solve this problem, the present invention is characterized by heating and reducing carbon-containing shaped materials in a single closed space in which an internal heat type rotary kiln and an external heat type rotary kiln are arranged in series and including at least the insides of the two rotary kilns during which making the reduced exhaust gas which is generated at the external heat type rotary kiln burn inside of the internal heat type rotary kiln.

FIG. 5

EP 2 813 583 A1

**Description**

Technical Field

The present invention relates to an apparatus for and method of production of reduced iron for reclaiming metallic iron from dust which is generated at an integrated ironmaking plant.

Background Art

The dust which is generated at an integrated ironmaking plant (ironmaking dust) contains a large amount of metallic iron. In particular, the dust in exhaust gas which is generated at a top blown converter (converter dust) reaches 10 kg/t steel in terms of the amount of dust generated per ton of iron produced, so is recovered and recycled as a source of iron. Converter dust is present in high temperature converter exhaust gas, so usually is recovered by wet dust collection. Wet collected converter dust is recovered by a thickener and treated to dehydrate it so that the moisture content becomes 20 to 28%. Even if dehydrated, with this level of moisture content, a muddy state is exhibited, so usually this is called "converter sludge".

Converter sludge is muddy in state, so is extremely difficult to handle. The oxidative curing process which utilizes the heat generated by autoxidation is used to reduce the amount of moisture content. This oxidative curing process uses the heat of oxidation of the 10 to 20% of metallic iron (metallic Fe (M·Fe)) and 60 to 70% contained FeO which are contained in the converter sludge to dry the sludge by auto heat generation in a yard (PLT 1).

This oxidative curing process stacks the converter sludge inside a curing yard, cures it as is for about 3 days, then turns it upside down and further cures it. This operation is repeated four or five times, then the sludge is allowed to naturally cool. This series of operations requires two or three weeks and further is governed by the weather. It cannot be said to be an industrial method. Further, there are also environmental problems due to the dust etc.

Due to the oxidative curing process, the initial 25% moisture content falls to about 12% resulting in a state which is good in handling ability. Converter dust in this state is usually called "converter fine-grained dust".

When recycling the converter sludge as an iron source, there is another problem to take note of. This is the zinc content. That is, the scrap which is used in a converter often includes galvanized steel sheet. Usually, converter fine-grained dust contains zinc in an amount of 0.2 to 2.0% or so. When the zinc concentration is low, recycling is possible as a sintering material or blast furnace-use nonfired pellet material. If the zinc concentration becomes higher, this becomes a cause for the formation of zinc-based deposits on the walls of the blast furnace, so the amount of zinc which is charged into the blast furnace is strictly managed. Therefore, when recycling converter fine-grained dust or other ironmaking dust with a high zinc content, attention must be paid to dezincification.

As the process of converting converter sludge to reduced iron, currently mainly two methods are being used. The first method is the method of using a rotating hearth type reducing furnace to reduce and dezincify the sludge to obtain reduced iron (rotary hearth furnace method or RHF) (PLT 2). In the rotary hearth furnace method, the converter sludge is pelletized into pellets and the pellets are reduced by a rotating hearth type reducing furnace. The sludge becomes reduced iron in a pellet form, so can be used as is as a blast furnace material. However, for pelletization, it is necessary to use converter sludge from which the moisture content has been removed and to use a pelletizer for pelletization. For this reason, with the rotary hearth furnace method, usually oxidative curing is used to adjust the moisture content.

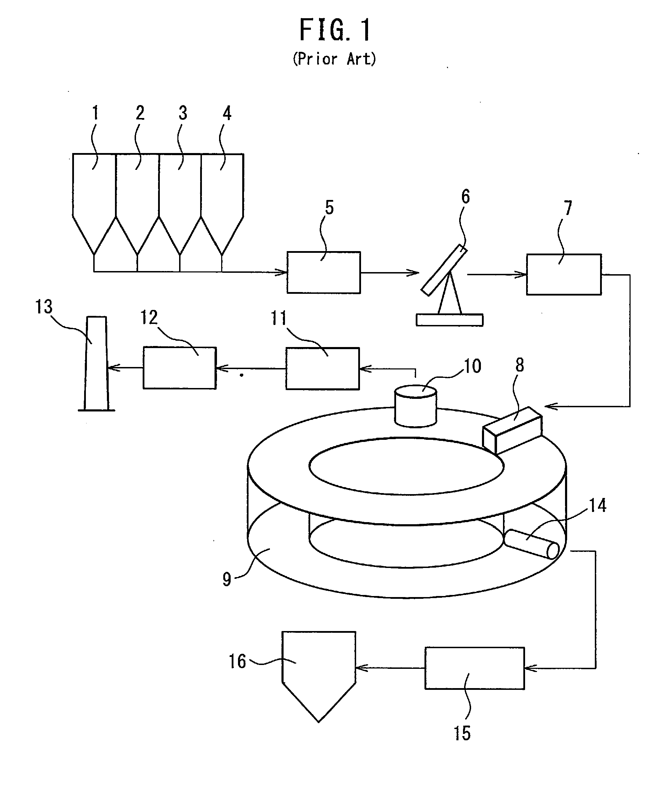

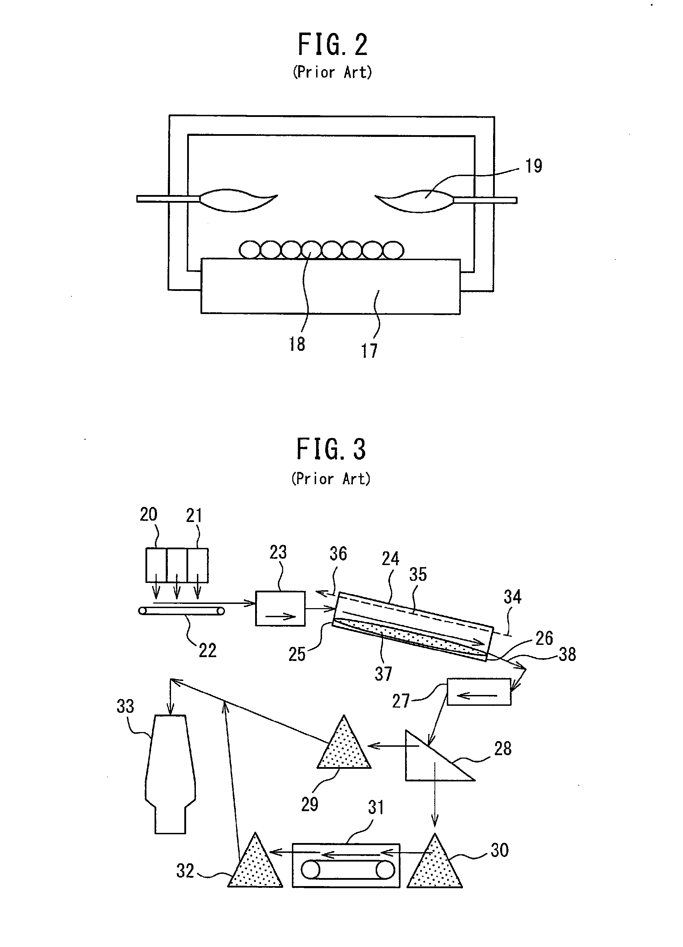

The flow of equipment in the method which uses a rotating hearth type reducing furnace (RHF method) is shown in FIG. 1, while a cross-section of the rotating hearth type reducing furnace is shown in FIG. 2. As shown in FIG. 1, as the dust reducing equipment using the rotating hearth method, there are a converter fine-grained dust storage tank 1, other dust storage tank 2, powdered coke storage tank 3, binder storage tank 4, and other such equipment for storage of materials. Furthermore, there is equipment for pretreatment of the material such as a ball mill 5, pan pelletizer 6, and dryer 7. Further, there are a charging apparatus 8, rotating hearth type reducing furnace 9, and discharge screw 14. To these, an exhaust gas 10, boiler recuperator 11, dust collector 12 and smokestack 13 are attached. Reference numeral 15 indicates a reduced iron cooler, while 16 indicates a finished product hopper. Further, at the rotating hearth 17 which is shown in FIG. 2, burners 19 are arranged whereby a structure is formed for heating the charged pellets 18 by radiant heat transfer

In the above-mentioned equipment, material dusts are mixed by a predetermined ratio and shaped by a pan pelletizer 6 into green pellets. These are dried by a dryer 7, then charged into the rotating hearth 17 to a thickness of one layer. In the rotating hearth 17, the charged pellets are reduced for 10 minutes to 20 minutes per cycle at a temperature of 1300°C, then discharged, cooled by a pellet cooler, then conveyed to a finished product hopper 16. The pellets which are charged on to the hearth are heated by the radiant heat due to the combustion of coke oven gas or other fuel by the burners 19 which are provided at the furnace. The rise in temperature causes a reduction reaction by the charged carbonaceous material to proceed. The zinc which is reduced together with the production of the metallic iron is discharged outside of the system. In the exhaust gas 10, the zinc is oxidized and becomes zinc oxide which is recovered by the exhaust gas dust collector 12 as secondary dust. Note that, from part of the burners 19, only air is introduced inside of the furnace to burn the CO gas which is generated along with the reduction reaction and its radiant heat is also utilized. As results of the operation, a metallization rate of 70 to 85%, a dezincification rate of 90 to 97% (NPLT 2), and a dezincification rate of 75 to 90% (NPLT 3) have been reported.

The second method is the method of using an internal heat type of direct heating rotary kiln to treat the sludge for reduction and dezincification to obtain reduced iron (rotary kiln reduction method (Waelz method)) (PLT 3 and NPLT 1). In the rotary kiln reduction method, dried ironmaking dust is mixed with the converter sludge and further treats this to dry, charges this into a rotary kiln, and heats and reduces it. For this reason, it is possible to omit the oxidative curing treatment of the converter dust. On the other hand, the obtained reduced iron differs in size and includes clumps and powder mixed together. For this reason, it is necessary to separate the clumps which can be used as blast furnace materials and the powder which is used as sintering material. The majority is powder which is used as sintering materials.

One example of the flow of the rotary kiln reduction method will be shown in FIG. 3. As shown in FIG. 3, from the storage tank 20, powder dust and carbonaceous material formed by coke or anthracite are discharged, are conveyed by a belt conveyor 22, and are mixed by a mixer 23. Further, the mixed material is charged into the rotating rotary kiln 24 from the upstream side 25 of the rotary kiln. On the other hand, the internal heat type rotary kiln is supplied with kiln inside feed gas (mainly fuel gas and air) 34 from the downstream side 26 of the rotary kiln, and CO gas which is generated from the furnace inside material and fuel are burned to raise the furnace inside temperature. Whatever the case, the furnace inside temperature reaches 1200 or so.

The material 37 tumbles at the inside of the rotating cylindrical furnace at the inside of the rotary kiln which has a slight slant while moving from the upstream side 25 of the rotary kiln to the downstream side 26 and is discharged from the downstream side 26 as reduced iron 38. On the other hand, the kiln furnace inside gas 35 flows in the opposite direction as the material from the downstream side 26 toward the upstream side 25 and is discharged from the upstream end 25 as kiln exhaust gas 36. While not clearly shown in FIG. 3, from the downstream end 26, not only air as kiln inside feed gas 34, but also fuel gas for compensating for heat etc., for example, coke oven gas etc., may be suitably supplied. During this time, the inside of the rotary kiln furnace is maintained in a reducing atmosphere by the CO, $CO_2$, etc. which is generated by burning the carbonaceous material. At the present time, high temperature kiln exhaust gas 36 is being introduced into the mixer 23 and the carbon-containing shaped material is being dried and reheated simultaneously with the mixing operation. Due to this, an effect of improvement of the heat efficiency is obtained due to the recovery of exhaust heat.

With both the rotary hearth furnace method and the rotary kiln reduction method, the iron oxide in the material 37 is reduced to reduced iron 38 which contains metallic iron at a high temperature in a reducing atmosphere. The zinc ingredient in the material 37 is vaporized and removed as metallic zinc, so dezincified reduced iron 38 is produced from the material 37.

Citations List

Patent Literature

PLT 1: Japanese Patent Publication No. 51-10166A
PLT 2: Japanese Patent Publication No. 2003-89823A
PLT 3: Japanese Patent Publication No. 2010-7163A

Nonpatent Literature

NPLT 1: G. Koshihira, Y. Aminaga, Y. Kawaguchi, M. Yariyama, A. Miyamoto, CAMP ISIJ, 10 (1997), p. 36 to 39
NPLT 2: NSC Technical Reports, No. 376, 2002
NPLT 3: 5th Nishiyama Commemorative Course "Making New Materials From Slag and Dust and New Developments", June 2011, p. 94

Summary of Invention

Technical Problem

As explained above, the process of production of reduced iron includes the rotary hearth furnace method (RHF) and the rotary kiln reduction method (Waelz method). In the rotary hearth furnace method, the converter fine-grained dust is pelletized and fired, so the produced reduced iron also becomes pellet shaped and therefore the produced reduced iron can be used as is as blast furnace material. However, on the other hand, the method which uses a rotating hearth type reducing furnace covers converter fine-grained dust after using oxidative curing to lower the moisture content to 12% or so, therefore this cannot provide a solution to the environmental problems which accompany oxidative curing.

Further, the metallic iron (M·Fe) in the oxidatively cured converter fine-grained dust becomes iron hydroxide and thereby agglomerates or forms pseudo particles, so the surface area becomes smaller compared with fine powder. For this reason, to perform reduction treatment in a short time, it is necessary to make the temperature a 1300°C or so high temperature. Furthermore, the pellet shaped material is allowed to stand in the rotating hearth to be heated and reduced, so can only be stacked in one level or two levels. The heat efficiency is poor. Further, to secure the amount of manufacture, the equipment has to be made larger. Normally, the exhaust gas temperature becomes a 1300°C high temperature, so a boiler and recuperator are set in front of the exhaust gas dust collector and the waste heat recovered, so the total capital expenses tends to become higher.

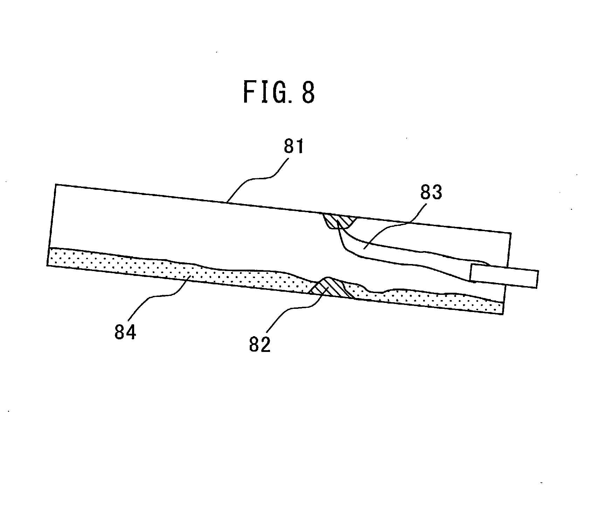

The Waelz method performs direct heating by an internal heat type rotary kiln, so can treat converter sludge as it is by just mixing in dry dust and burning gas which is produced by reduction (CO gas) inside a rotary kiln. There are the advantages that since converter sludge is used, oxidative curing is unnecessary and since the produced CO gas is used, feed of fuel from the outside is kept down. However, on the other hand, the problem remains that the metallic iron is reoxidized at the drying step since the material is in the powder state. Further, the internal heat type rotary kiln 81 is directly heated at the inside, so the material 84 is easily unevenly heated and a dam ring 82 easily forms. A dam ring forms due to the following mechanism (see FIG. 8).

Relatively low temperature (in the Waelz method, usually a mixer is used for drying treatment, but about 100°C or so) material 84 is charged into the internal heat type rotary kiln 81. Heat exchange is performed with high temperature (about 1100 to 1200°C) furnace inside combustion gas. During that time, the iron oxide and ZnO in the temperature elevated material are reduced and the carbonaceous material is gasified. In this regard, the material contains $SiO_2$ and CaO as gangue ingredients. These gangue ingredients easily form low melting point substances such as shown below between the iron oxide $Fe_2O_3$ and the reduced intermediate FeO: $Fe_2O_3$·CaO: melting point 1206°C

$FeO·SiO_2$: melting point 1180°C
$FeO·CaO$: melting point 1105°C

Therefore, when the content of gangue ingredients is large, when the material temperature in the firing zone is overly high, when the temperature of the burner flame 83 is overly high, when the shape of the burner flame 83 is overly wide in angle and the flame licks up the inside wall surface of the rotary kiln 81, etc., a deposit forms on the inside wall surface of the rotary kiln (FIG. 8). This deposit, as shown in FIG. 8, is formed in a ring shape, so is called a "dam ring 82". A dam ring obstructs movement of the treated material inside the rotary kiln 81 (material 84). On top of this, sometimes the dam ring 82 successively sheds in large amounts, so this is not preferable from the viewpoint of stable operation.

Furthermore, the material remains a powder, so the contact area between the carbonaceous material and the converter dust is small and suppressing formation of a dam ring means that the furnace temperature cannot be raised, so so as a result the reaction speed becomes slow and the productivity is low. For this reason, to lengthen the residence time inside the furnace, the facility has to be made large in size. The increased size of the facility limits the site, so there are problems such as securing the site at an existing ironmaking plant. Due to this, a method of production and apparatus for production of reduced iron from ironmaking dust which use small sized facilities and therefore are good in efficiency are sought.

The present invention solves the problem of the prior art and has as its object the pursuit of a method of production and an apparatus for production of reduced iron from ironmaking dust which do not require oxidative curing of converter dust, which further improve the productivity by high heat efficiency and stable operation, and which give a relatively compact facility.

Solution to Problem

The inventors discovered the following matter as a result of repeated intensive studies for solving the above problem.

(a) The inventors discovered that by evenly mixing a carbonaceous material into a material which is mainly comprised of fine iron oxide such as converter sludge and by shaping the material into pellets (carbon-containing shaped materials), reduction treatment at a relatively low temperature of 1000°C or so becomes possible. Further, the inventors discovered that dezincification of the material also proceeds simultaneously with the reduction. Further, the inventors discovered that since it is possible to directly treat fine powder iron oxide such as converter sludge, oxidative curing work becomes unnecessary and the process is greatly shortened and environmental problems are eliminated.

(b) The inventors discovered that it is possible to use an external heat type rotary kiln for heat treatment at 1000°C or so, it is possible to uniformly heat the material (carbon-containing shaped materials), and it is possible to increase the occupation ratio at the inside of the rotary kiln (the ratio of material charging area to cross-sectional area).

(c) The inventors discovered that the CO gas which is generated by reduction of the material (carbon-containing shaped materials) (generated CO gas) can be burned inside of an internal heat type rotary kiln which is arranged in series with the external heat type rotary kiln and used for heating (preheating) the material before reduction treatment. Due to this, not only the sensible heat of the generated CO gas itself, but also the heat of combustion of the generated CO gas can be utilized and furthermore a large energy recovery efficiency can be obtained.

(d) Furthermore, the inventors discovered that with reduction treatment of 1000°C or so inside of the external heat type rotary kiln, the gangue ingredients inside of the material will not be melted, the formation of a dam ring at the inside surface of the rotary kiln can be suppressed, and the stability of operation can be strikingly improved.

(e) Further, inside of the internal heat type rotary kiln, there is a concern over unevenness of heating due to the shape of the burner flame, but the inventors discovered that by burning the generated CO gas a little at a time at the inside of the rotary kiln in the longitudinal direction, it is possible to prevent local overheating. As a result, it is possible to suppress the formation of a dam ring at the inside surface of the rotary kiln.

(f) The inventors discovered that by arranging an external heat type rotary kiln and an internal heat type rotary kiln in series, it is possible to construct a system with a high productivity and as a result possible to reduce the installation area.

The present invention was made based on these discoveries and can provide means for directly pretreating converter sludge so as to obtain carbon-containing shaped materials without oxidative curing and for efficiently drying, heating, and reducing these by an internal heat type of direct heating rotary kiln and an external heat type of indirect heating rotary kiln. It has as its gist the following:

(1) A method of production of reduced iron by reducing ironmaking dust which contains iron oxide, the method of production of reduced iron characterized by having

a carbon-containing shaped material manufacturing step which mixes and shapes ironmaking dust which contains iron oxide and a carbonaceous material and binder to produce carbon-containing shaped materials and a heating and reducing step which heats the carbon-containing shaped materials by an internal heat type rotary kiln, then heats them by an external heat type rotary kiln to produce reduced iron, wherein the heating and reducing step is treated inside a single closed space which is formed including the insides of the rotary kilns of the internal heat type rotary kiln and external heat type rotary kiln which are arranged in series and gas generated inside the external heat type rotary kiln is burned inside of the internal heat type rotary kiln.

(2) The method of production of reduced iron according to (1) characterized in that, in the heating and reducing step, air is fed from an air feed port which is set at one or two or more locations at the inside of the internal heat type rotary kiln in a longitudinal direction and the gas generated inside of the external heat type rotary kiln is burned.

(3) The method of production of reduced iron according to (2) characterized by performing control so as to increase the amount of air which is fed to the inside of the internal heat type rotary kiln when the temperature at the inside of the internal heat type rotary kiln is lower than a preset temperature and to reduce the amount of air which is fed to the inside of the internal heat type rotary kiln when the temperature at the inside of the internal heat type rotary kiln is higher than a preset temperature.

(4) The method of production of reduced iron according to (2) or (3) characterized by controlling the amount of air which is fed to the inside of the internal heat type rotary kiln through each air feed port so that a distribution of temperature inside of the internal heat type rotary kiln in the longitudinal direction becomes a preset temperature distribution.

(5) The method of production of reduced iron according to any one of (1) to (4) characterized by feeding combustible gas to inside the closed space.

(6) The method of production of reduced iron according to (5) characterized by performing control so as to increase the amount of feed of the combustible gas when the temperature of the carbon-containing shaped materials at the midpoint between the internal heat type rotary kiln and the external heat type rotary kiln is lower than a preset temperature and to reduce the amount of feed of the combustible gas when the temperature of the carbon-containing shaped materials is higher than a preset temperature.

(7) The method of production of reduced iron according to any one of (1) to (6) characterized in that an external heating furnace of the external heat type rotary kiln has an external heating furnace burner which burns combustible gas and by feeding combustion gas of the external heating furnace burner to the inside of the external heat type rotary kiln.

(8) The method of production of reduced iron according to any one of (1) to (7) characterized in that the ironmaking dust has an average particle size of 3 μm or less.

As explained in detail later, the "average particle size" means D50 (particle size which corresponds to 50% frequency in cumulative frequency distribution from fine grains).

(9) The method of production of reduced iron according to any one of (1) to (8) characterized in that the binder is corn starch.

(10) The method of production of reduced iron according to any one of (1) to (9) characterized in that the carbon-containing shaped materials are spherical shapes equivalent to diameters of 10 mm to 30 mm or columnar shapes with diameters of 10 mm to 30 mm and lengths of 10 mm to 30 mm.

The "spherical shapes" and "columnar shapes" referred to here mean shapes equivalent to spheres or columns and are not limited to strict spherical or columnar shapes.

(11) The method of production of reduced iron according to any one of (1) to (10) characterized in that in the heating and reducing step, the relationship between the carbon-containing shaped material temperature T°C at the inside of the external heat type rotary kiln and the residence time H minutes satisfies the following formula: $H \geq 120 - 0.1T$ where, $980 \leq T \leq 1100$

(12) The method of production of reduced iron according to any one of (1) to (11) characterized in that the carbon-containing shaped materials are dried and preheated at the internal heat type rotary kiln and are reduced at the external heat type rotary kiln.

(13) An apparatus for production of reduced iron by reducing ironmaking dust which contains iron oxide, the apparatus for production of reduced iron characterized by having

a carbon-containing shaped material manufacturing apparatus which mixes and shapes ironmaking dust which contains iron oxide and a carbonaceous material and binder to produce carbon-containing shaped materials,

a heating and reducing apparatus which has an internal heat type rotary kiln and external heat type rotary kiln which are arranged in series, is formed with a single closed space which includes the insides of the rotary kilns, and further which has air feeding means for feeding air to the inside of the internal heat type rotary kiln,

a carbon-containing shaped material charging apparatus which has means for charging the carbon-containing shaped materials to the inside of the internal heat type rotary kiln,

a finished product discharge apparatus which has means for discharging the reduced carbon-containing shaped materials from the external heat type rotary kiln, and an exhaust apparatus which sucks in the gas at the inside of the internal heat type rotary kiln.

(14) The apparatus for production of reduced iron according to (13) characterized in that the air feeding means has an air feed port which is arranged at one or two or more locations of the internal heat type rotary kiln in the longitudinal direction.

(15) The apparatus for production of reduced iron according to (13) or (14) characterized in that the heating and reduction apparatus has means for measuring the temperature at the inside of the internal heat type rotary kiln and has an air feed rate control apparatus which performs control to increase the amount of air which is fed by the air feeding means when the measured temperature is lower than a preset temperature and to reduce the amount of air which is fed by the air feeding means when the measured temperature at the inside of the internal heat type rotary kiln is higher than a preset temperature.

(16) The apparatus for production of reduced iron according to (13) or (14) characterized in that furthermore the heating and reduction apparatus has means for measuring a distribution of temperature at the inside of the internal heat type rotary kiln in the longitudinal direction and has an air feed rate control apparatus which controls the amount of air which is fed by the air feeding means so that the measured distribution of temperature in the longitudinal direction becomes a preset distribution of temperature in the longitudinal direction.

(17) The apparatus for production of reduced iron according to any one of (13) to (16) characterized in that the internal heat type rotary kiln and the external heat type rotary kiln are arranged sandwiching an intermediate connecting part.

(18) The apparatus for production of reduced iron according to (17) characterized in that axes of rotation of the internal heat type rotary kiln and the external heat type rotary kiln are arranged on the same line, the intermediate connecting part and the internal heat type rotary kiln are an integral structure, one end of the intermediate connecting part is inserted at the inside of the external heat type rotary kiln, and a sheet is arranged in a spiral shape at the inside surface of the intermediate connecting part.

(19) The apparatus for production of reduced iron according to any one of (13) to (18) characterized in that in the heating and reduction apparatus, an external heating furnace of the external heat type rotary kiln has an external heating furnace burner which burns combustible gas and has means for introducing combustion exhaust gas of the external heating furnace burner to the inside of the external heat type rotary kiln.

(20) The apparatus for production of reduced iron according to any one of (13) to (19) characterized in that in the heating and reduction apparatus, at least one of the external heat type rotary kiln or intermediate connecting part has a combustible gas feeding means for feeding combustible gas.

(21) The apparatus for production of reduced iron according to any one of (13) to (18) characterized in that in the heating and reduction apparatus, the external heating furnace of the external heat type rotary kiln is an electrical furnace.

(22) The apparatus for production of reduced iron according to (21) characterized in that in the heating and reduction apparatus, at least one of the external heat type rotary kiln or intermediate connecting part has an extra burner which burns combustible gas and has means for introducing the combustion exhaust gas of the extra burner at the inside of the heating and reduction apparatus.

(23) The apparatus for production of reduced iron according to any one of (13) to (22) characterized in that the exhaust apparatus has a dust collecting apparatus and blower.

Advantageous Effects of Invention

According to the present invention, the above-mentioned problems are solved. That is, the following advantageous effects are obtained.

(a) Fine powder iron oxide such as converter sludge can be directly treated, so the conventional oxidative curing work at a yard becomes unnecessary and the process can be greatly shortened and environmental problems can be solved.

(b) Fine powder iron oxide is reduced as carbon-containing shaped materials, so reduction treatment is possible at 1000°C or so which is lower than the conventional treatment temperature and an external heat type rotary kiln can be used. An external heat type rotary kiln enables the inside material to be uniformly heated, so the inside occupation ratio (area charged by material compared with cross-sectional area) can be made larger than in an internal heat type rotary kiln. Further, since uniform heating is performed, it is possible to obtain reduced iron by a compact facility and with a good quality. Furthermore, dezincification treatment proceeds together with this, so dust which contains zinc can be also treated.

(c) The CO gas which is generated due to the reduction treatment is utilized as a heat source of the internal heat type rotary kiln, so it is possible to utilize not only the sensible heat of the generated CO gas itself, but also the heat of combustion. Furthermore, the combustion exhaust gas of the burners of the external heat type rotary kiln can also be reutilized, so a large energy recovery efficient can be obtained.

(d) In the 1000°C or so reduction treatment in the external heat type rotary kiln, formation of a dam ring can be suppressed and the stability of operation can be strikingly improved.

(e) Inside the internal heat type rotary kiln, the combustion is controlled and local overheating is prevented, so formation of a dam ring can be suppressed and the stability of operation can be strikingly improved.

(f) The external heat type rotary kiln and the internal heat type rotary kiln are used to form a single closed space, so it is possible to efficiently recover and recycle the generated CO gas. Further, the facility can be made compact and the installation area can be reduced. For example, the installation area of the series of facilities including also a dust treatment capacity 22 t/h reducing furnace, preheating furnace, and drying furnace is, in the case of an RHF (rotating hearth type reducing furnace), 530 m$^2$ (NSC Technical Reports No. 376, 2002) and, in the case of the Wealz method (direct heating rotary kiln), 449 m$^2$ (Tetsu to Hagane, 64 (1978), A103). As opposed to this, if a facility according to the present invention, 191 m$^2$ or so is expected.

(g) By adding corn starch as a binder, it is possible to raise the crushing strength after drying the carbon-containing shaped materials, the formation of powder in the heating and reducing step is suppressed, and final finished product yield is improved.

Brief Description of Drawings

FIG. 1 is a view which shows a method of production of reduced iron by a conventional rotating hearth type reducing furnace.
FIG. 2 is a conceptual view which shows a cross-section of a rotating hearth type reducing furnace.
FIG. 3 is a view which shows a process of production of reduced iron by a conventional rotary kiln.

FIG. 4 is a flow chart which shows a process of production of carbon-containing shaped materials.

FIG. 5 is a view which shows one example of an embodiment of the present invention.

FIG. 6 is a view which shows the relationship between a carbon-containing shaped material temperature T°C inside of the external heat type rotary kiln and a residence time Hmin.

FIGS. 7(a), (b), and (c) are all conceptual views which show examples of arrangement of the internal heat type rotary kiln and external heat type rotary kiln in an embodiment of the present invention.

FIG. 8 is a conceptual view which explains the mechanism of formation of a dam ring.

Description of Embodiments

The present invention will be explained below in detail. Note that, the embodiments of the present invention are not limited to the embodiments which are shown below.

Carbon-containing shaped material Manufacturing Step

In the carbon-containing shaped material manufacturing step, a reducing agent constituted by a carbon material (carbonaceous material), quick lime for adjusting the moisture content, and a binder material which has the role of binding the particles are mixed with the ironmaking dust and the mixture is shaped to produce carbon-containing shaped materials as the material for heating and reduction treatment. As the material of the reduced iron in the present invention, the dust which is generated in a ferrous metal production process of an ironmaking plant etc., that is, ironmaking dust, is utilized. Ironmaking dust has a large content of iron oxide. There is a high need for recycling. As the ironmaking dust which contains iron oxide, for example, there are floating dust in the exhaust gas of the converter (converter dust) and converter sludge recovering the converter dust by a thickener (in muddy state, so called "converter sludge"), dust collected from the converter environment in the converter building, dust collected from the blast furnace environment at the blast furnace hearth, floating dust in the exhaust gas at the pig-iron pretreatment step, floating dust in the exhaust gas at the mold part in continuous casting, secondary dust of the blast furnace, neutral sludge in the cold rolling wastewater, etc. So long as dust which contains iron oxide, the type does not matter. These types of ironmaking dust are fine powder, so are difficult to handle. However, since fine powder, the specific surface area (surface area per unit weight) becomes broader and the reduction reaction can easily proceed. For example, converter sludge comprised of converter dust which has been collected by the wet method has an average particle size of an extremely fine 1 $\mu$m or less.

On the other hand, the current material which is used with the rotating hearth type reduction method is converter sludge treated by oxidative curing. If treating converter sludge etc. by oxidative curing, the heat generated by oxidation during curing and the hydroxylation reaction caused by the water which is contained in the converter sludge cause the metallic iron to become iron hydroxide, so the reduction reactivity deteriorates. Furthermore, the shapeability is improved due to reduction of the moisture content, but quasi particles are formed and the total surface area of the particles decreases. This also causes the reduction reactivity to deteriorate. Further, the oxidative curing process results in the metallization rate after the reduction treatment to decline since 10 to 20% of the metallic iron which is contained is oxidized.

Therefore, the inventors came up with the idea of increasing the specific surface area of the ironmaking dust particles to improve the reduction reactivity and therefore using the ironmaking dust as is as fine powder and studied in depth the method of use of the same. As a result, the inventors discovered that if the average particle size of the ironmaking dust (D50: particle size at which cumulative frequency in the cumulative particle size distribution from fine particles corresponds to 50%) is 3.0 $\mu$m or less, it is possible to obtain a practically sufficient reduction reactivity. In particular, converter sludge etc. has a D50 of 1.0 $\mu$m or less, so a good reduction reactivity can be obtained. However, if the D50 of the ironmaking dust becomes less than 0.1 $\mu$m, the handling becomes difficult, so the average particle size of the ironmaking dust is preferably 0.1 $\mu$m or more. Furthermore, 0.3 $\mu$m or more is more preferable. If prescribing the D50 considered from the particle size distribution of ordinary ironmaking dust, ironmaking dust which has substantially the same extent of particle size distribution is obtained. If D50 is 3.0 $\mu$m, D10 becomes 1.0 $\mu$m and D90 becomes 10.0 $\mu$m or so. From the viewpoint of securing the reduction reactivity and the viewpoint of the treatability, too large coarse particles are not preferable, but if D50 is 3.0 $\mu$m or less, there is substantially no problem.

Furthermore, by using ironmaking dust without oxidative curing treatment, it is possible to effectively utilize the originally contained metallic iron and possible to obtain a high metallization rate after reduction treatment. Further, since fine powder dust with a large specific surface area is used, the dezincification ability also becomes better like the reduction reactivity. For this reason, it becomes possible to even treat zinc-containing ironmaking dust. Dezincified reduced iron can be utilized as a blast furnace material or as a material for a steelmaking pretreatment furnace.

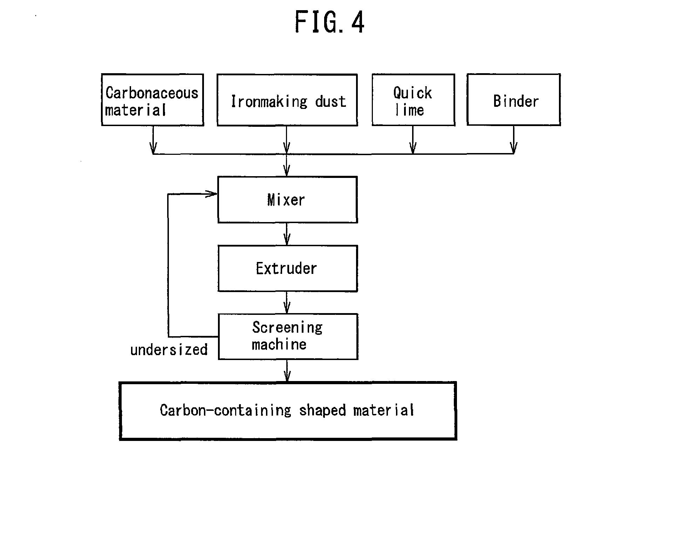

FIG. 4 shows a process for production of carbon-containing shaped materials with reference to converter sludge as an example. High moisture content, muddy converter sludge is charged into a mixer equipped with a load cell by a shovel car. Based on this charged amount and chemical analysis values and moisture content values which were measured in advance, predetermined amounts of carbonaceous material, quick lime, and binder were discharged and charged into the mixer.

The carbonaceous material is the reducing agent for reducing iron oxide to metallic iron and has a carbon equivalent of 0.7 to 1.3 in range. Here, the "carbon equivalent" is the ratio to the theoretical amount of carbon based on the following formula 1 and formula 2. If the iron oxide of the converter sludge is all $Fe_2O_3$, to reduce 1 mole of $Fe_2O_3$ and obtain 2 moles of metallic iron, 3 moles of C (carbon) are necessary. This is the theoretical amount of carbon. This means that 0.7 to 1.3 times the theoretical amount of carbon is added.

$$Fe_2O_3 + 3C + \Delta H(1) \rightarrow 2Fe + 3CO \cdots \qquad \text{(formula 1)}$$

$$FeO + C + \Delta H(2) \rightarrow Fe + CO \cdots \qquad \text{(formula 2)}$$

The chemical reactions of the above formula 1 and formula 2 are both endothermic reactions. The amounts of heat absorbed are respectively

$$\Delta H(1) = 966 \times 10^3 \text{ kcal/t(Fe)},$$

$$\Delta H(2) = 610 \times 10^3 \text{ kcal/t(Fe)}$$

To cause these reactions, it is necessary to add an amount of heat corresponding to the above absorbed heat.

Quick lime is an agent which adjusts the moisture content. It is added to give a moisture content of the shaped materials of 20 to 25%. The ironmaking dust is fine powder, so is recovered wet by a thickener etc. and becomes muddy in state (sludge). It cannot be shaped in that state. Therefore, quick lime and dry dust (ironmaking dust recovered in a dry state, for example, converter environment collected dust) are added to adjust the moisture content to 20 to 25% (mass%).

The binder is, for example, corn starch. It is added to give a crushing strength after drying the shaped materials of 5 kg/cm$^2$ or more. This is because if the crushing strength after drying the shaped materials is less than 5 kg/cm$^2$, handling and tumbling in the rotary kiln cause part of the shaped materials to break.

These materials are charged into a mixer where the materials are then mixed. A mixer of a rotating batch type is usually used, but if able to uniformly mix the materials, the type is not particularly limited. The mixed blended materials pass through a relay tank and are shaped by an extruder or roll shaping machine. The shaped materials of the mixed material will be called "carbon-containing shaped materials". After this, the carbon-containing shaped materials are screened to separate predetermined sizes of carbon-containing shaped materials. If the iron which is contained in the materials or carbon-containing shaped materials is allowed to stand, it becomes iron oxide due to the oxygen in the air. This is an exothermic reaction, so attention must be paid to the method of storage so that the ironmaking dust used as the material and the finished product carbon-containing shaped materials etc. not be piled up in a manner resulting in heat building up. Depending on the conditions, sometimes the shaped materials will ignite.

The shape of the carbon-containing shaped materials is generally spherical or columnar, but it may also be cubic or parallelepiped or pyramidal prismatic and briquettes etc. The shape is not limited. The size of the carbon-containing shaped materials, considering the later reduction treatment, should be diameters of 5 to 50 mm or so as spherical shapes or diameters of 5 to 50 mm and lengths of 5 to 50 mm as columnar shapes. If the diameters or lengths are smaller than 5 mm, the reduced iron after reduction treatment becomes smaller and use as a blast furnace material is not possible. Further, if larger than 50 mm, the shaped materials easily break inside of the rotary kiln during treatment and the powderization rate rises, so this is not preferable. Preferably, the diameter or length is made 10 to 30 mm. More preferably, it is made 15 to 25 mm.

By forming shaped materials, the finished product reduced iron also shrinks somewhat, but this is obtained as shaped materials and can be used as is as blast furnace material. The apparatus which is required for the series of steps from dispensing of materials to selection of a predetermined size of carbon-containing shaped materials will be called a "carbon-containing shaped material production apparatus". The individual apparatuses which form the carbon-containing shaped material production apparatus are not particularly limited so long as the above-mentioned functions can be achieved.

Heating and Reducing Step

The heating and reduction step in the present invention indicates the series of steps from when the carbon-containing shaped materials which are produced at the carbon-containing shaped material manufacturing step are charged into the single closed space formed by the internal heat type and external heat type rotary kiln, dried, heated, and reduced to when they are discharged as reduced iron. The carbon-containing shaped materials which are obtained at the carbon-containing shaped material manufacturing step are not treated by oxidative curing, so the ironmaking dust is mixed with the carbonaceous material as fine powder. For this reason, the specific surface area of the iron oxide becomes broader, the reactivity with the reducing agent formed by the carbonaceous material can be raised, and the reduction treatment temperature can be lowered.

The inventors confirmed that if heating the carbon-containing shaped materials according to the present invention to 1000°C or so, the reduction reaction proceeds to an extent not posing a practical problem. The temperature can be lowered tremendously compared with the 1250 to 1350°C of the conventional rotating hearth type reduction method or the 1100 to 1200°C of the Waelz method. Due to this lowered temperature, it becomes possible to use the external heat type rotary kiln which could not be used in the past.

However, to reduce the iron oxide by C (carbon) itself, a 950°C or more temperature is necessary. Therefore, the lower limit of the reduction treatment temperature (treatment temperature at external heat type rotary kiln) is ideally 950°C. However, factors such as the state of contact between the fine powder iron oxide and carbon inside the carbon-containing shaped materials also have an effect, so the lower limit temperature of the reduction treatment is preferably 980°C, more preferably 990°C or more. If 1000°C or more, any kind of carbon-containing shaped materials can be stably reduced. The upper limit temperature of the reduction treatment depends on the heat resistance of the equipment of the external heat type rotary kiln. In heat resistant cast steel which is produced by current centrifugal casting, 1200°C or so is the upper limit. If considering the variation in temperature etc., from the viewpoint of protection of the equipment, the upper limit temperature is preferably 1100°C, more preferably is 1050°C. If the heat resistance of the equipment of the external heat type rotary kiln rises, naturally the reduction treatment temperature can also be raised.

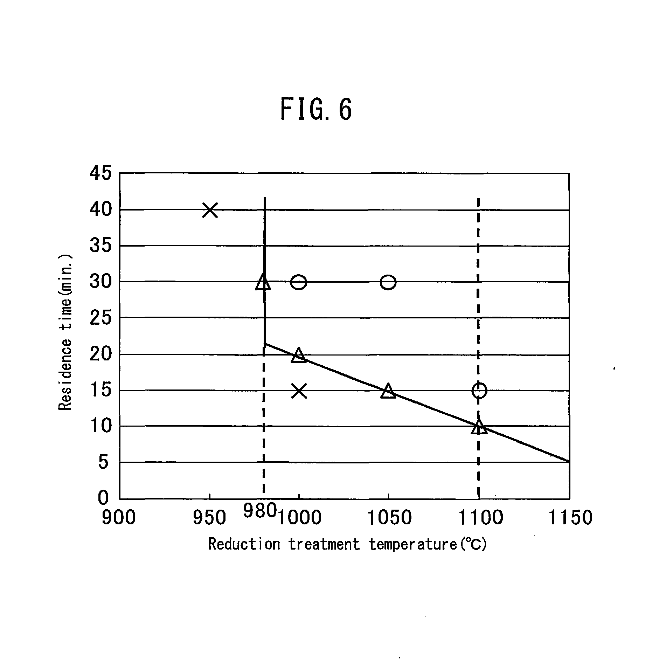

The fact that the treatment time at the external heat type rotary kiln is determined in relation with the temperature was confirmed by the inventors etc. The inventors confirmed by experiments that with the relationship which is prescribed by the following formula 3 between the reduction treatment temperature (T°C) at the external heat type rotary kiln and the reduction treatment time (residence time) (H min.), it is possible to obtain reduced iron of a quality which is equal to or better than that of the conventional RHF method or Waelz method (see FIG. 6 and examples).

$$H \geq 120 - 0.1T \quad \cdots (\text{formula 3})$$

where, $980 \leq T \leq 1100$

   T: Reduction treatment temperature of carbon-containing shaped materials (°C),
   H: Residence time of carbon-containing shaped materials (reduction treatment time) (min)

In other words, T is the carbon-containing shaped material temperature at the inside of the external heat type rotary kiln, while H is the residence time inside of the external heat type rotary kiln. In the reduction reaction, the higher the treatment temperature, the faster the reaction proceeds, so the shorter the time in which treatment can be performed. However, the carbon-containing shaped materials are not always uniform in properties. However, even if the heat resistance of the equipment is improved and 1100°C or more high temperature treatment becomes possible, a certain extent of reaction time has to be secured, so H may be made 5 minutes at the shortest. Note that, the upper limit of H is not particularly limited, but even if residing too long, the reduction rate cannot be improved that much, so an extra margin of 40 minutes or 10 minutes at the right side of formula 3 should be provided. That is, either $H \leq 130 - 0.1T$ or 40.

As an indicator of the quality of the reduced iron, the gross metallization rate is employed. A gross metallization rate with the RHF method or Waelz method of 80% or more is made the passing standard. Details will be explained in the later mentioned examples.

An external heat type rotary kiln, compared with an internal heat type rotary kiln, enables the inside material to be uniformly heated, so the inside occupation ratio (the ratio of material charging area to cross-sectional area) can be raised. For example, in the case of a conventional internal heat type rotary kiln, the occupation ratio is about 5% or so, but it was confirmed that if an external heat type rotary kiln, the rate can be raised to about 10 to 15%. Furthermore, the reduction reactivity was high, so it was confirmed the reduction treatment time was also shortened. For example, in the case of a conventional internal heat type rotary kiln, about 2 hours or so were required, including for preheating, but it was confirmed that with the method according to the present invention which uses the external heat type rotary kiln, the treatment can be shortened to about 30 minutes.

Further, the gas which is generated by the reduction treatment is CO gas as will be understood from the above-mentioned formula 1 and formula 2. In the present invention, the CO gas which is generated in the reduction treatment inside of the external heat type rotary kiln (generated CO gas) is recovered as it is and is recycled when preheating the carbon-containing shaped materials. Not only the 800 to 1000°C or so sensible heat of the generated CO gas itself, but also the heat of combustion can be utilized, so the heat efficiency can be greatly improved. That is, by making the generated CO gas burn in the internal heat type rotary kiln, it is possible to use this as a heat source of the internal heat type rotary kiln.

Furthermore, by feeding the combustion exhaust gas of the external heating furnace burner of the external heat type rotary kiln to the inside of the external heat type rotary kiln, it is also possible to actively utilize the 1200°C or so sensible heat of the combustion exhaust gas. In the present invention, this heat is used to heat (pretreat) the carbon-containing shaped materials and improve the heat efficiency of the reduction treatment at the external heat type rotary kiln.

To efficiently perform this series of heat treatment operations, in the present invention, an internal heat type rotary kiln and external heat type rotary kiln were arranged in series, a single closed space including the inside spaces of the two rotary kilns was formed, and the carbon-containing shaped materials were heated (preheated) and reduced in the same. Due to this, the flow of generated CO gas and the flow of the carbon-containing shaped materials can proceed smoothly without being delayed and efficient overall treatment becomes possible.

In this way, two stages of heat treatment at the internal heat type and external heat type rotary kilns are performed to perform a series of treatments of drying, preheating (heating), and reducing the carbon-containing shaped materials. In particular, the front stage internal heat type rotary kiln is used for preheating the carbon-containing shaped materials, while the back stage external heat type rotary kiln is used for continuously reducing the carbon-containing shaped materials. By clarifying the division of roles of the internal heat type rotary kiln and the external heat type rotary kiln in this way, control of the temperature at the inside of the two rotary kilns and control of the residence time of the carbon-containing shaped materials can be precisely performed.

Heating and Reduction Apparatus The above explained series of treatment of drying, preheating (heating), and reducing the carbon-containing shaped materials was performed by the heating and reduction apparatus. The heating and reduction apparatus has a serially arranged internal heat type rotary kiln and external heat type rotary kiln. A single closed space including the insides of these rotary kilns is formed. Furthermore, this is configured by an air feeding means for feeding air to the inside of the internal heat type rotary kiln.

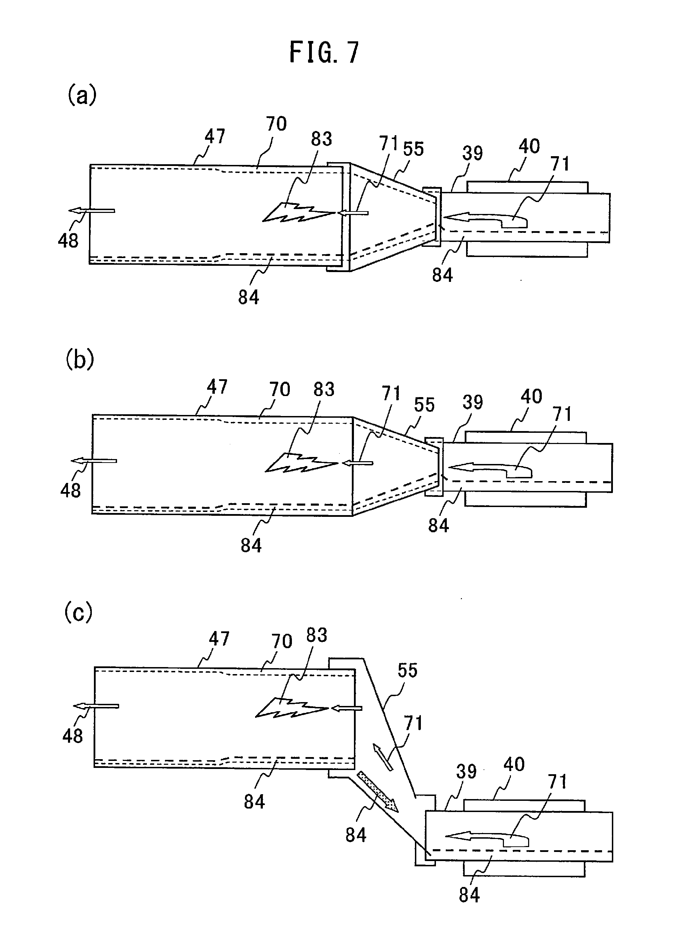

The "single closed space" is comprised of the inside spaces of the two rotary kilns which are connected in some form or another and is separated from the atmosphere. FIGS. 7 show examples of the arrangement of the internal heat type rotary kiln and the external heat type rotary kiln. As shown in the examples of FIGS. 7, a single closed space is formed including at least two rotary kilns. In that, the carbon-containing shaped materials and the reduced exhaust gas which was generated inside the external heat type rotary kiln can move.

The two rotary kilns may be structured to be directly connected, but usually the temperatures of the iron shells greatly differ. Since the difference in heat expansion is large, the two rotary kilns are connected through an intermediate connecting part. For example, the iron shell of the external heat type rotary kiln is directly heated, so becomes about 1000°C, but the iron shell of the internal heat type rotary kiln is lined with a refractory at its inside surface, so only becomes 100 to 200°C or so. To absorb this difference in heat expansion, for example, the case may be considered where the two rotary kilns are connected through a frustoconical shaped hollow ring (such a member connecting two rotary kilns called an "intermediate connecting part") (FIGS. 7(a) and (b)). In this case, the two rotary kilns and the intermediate connecting part form the single closed space. Note that, in this case, from the viewpoint of the transport of the carbon-containing shaped materials, the hollow ring is preferably structured to rotate.

FIG. 7(b) shows an example of the intermediate connecting part of FIG. 7(a) made integral in structure with the internal heat type rotary kiln. In this case, the intermediate connecting part rotates together with the internal heat type rotary kiln. As explained later, details of the present invention will be explained with reference to this structure as an example.

FIG. 7(c) shows an example of connection of two rotary kilns by a duct serving also as a chute. In this case, that chute becomes an intermediate connecting part. The carbon-containing shaped material discharging side of the internal heat type rotary kiln is arranged at a higher position than the carbon-containing shaped material charging side of the external heat type rotary kiln. Through the inside of the duct serving also as the chute, the carbon-containing shaped materials can be made to drop down and move. The reduced exhaust gas which is generated at the inside of the external heat type rotary kiln passes through the duct and is introduced into the internal heat type rotary kiln. Further, between the two rotary kilns, it is possible to separately set a chute for carrying the carbon-containing shaped materials and piping for carrying reduced exhaust gas, but use of a single duct is preferable since the facilities can be simplified and from the viewpoint of heat retention.

Note that, a rotary kiln is usually set at a slant from the viewpoint of conveyance of the treated material. The same is true for the rotary kilns of the present invention. Therefore, the rotary kilns which are explained in the examples which are shown in FIGS. 7 and in this Description are, unless particularly indicated otherwise, deemed to be set at a slant so as to face downward with respect to the direction of advance of the treated materials (in the case of the present invention, the carbon-containing shaped materials) (the figures show the kilns horizontal for convenience).

Inside the closed space, the generated CO gas is present at a gas temperature of 800 to 1000°C. CO gas has an ignition point of 609°C, so by feeding air to the inside of the closed space, it is possible to cause the CO gas to burn. Therefore, means for feeding air to the internal heat type rotary kiln part of the closed space (air feeding means) is provided to make the generated CO gas burn. This heat of combustion becomes the heat source of the internal heat type rotary kiln.

The air feeding means, for example, feeds air from a blower which is arranged at the outside of the rotary kiln (air feed blower) to the inside of the internal heat type rotary kiln through a pipe (air feed pipe) from the air feed port at the front end and mixes the air with the generated CO gas there to make it burn. The air feed port rotates together with the internal heat type rotary kiln, so is preferably set near the center part (axis of rotation) of the cross-section of the rotary kiln. The air feed port is not limited to the above mode and is not particularly limited so long as structured to feed air to the internal heat type rotary kiln part of the closed space and mix it with the generated CO gas to burn the gas.

The generated CO gas may be made to burn at one location of the internal heat type rotary kiln in the longitudinal direction, but preferably is made to burn at two or more locations. If making it burn at one location, the burner flame becomes larger and the heating sometimes becomes uneven. Furthermore, the front end part of the flame becomes high in temperature (hot spot), so formation of a dam ring is a concern. For this reason, it is preferable to arrange air feed ports at two or more locations of the internal heat type rotary kiln in the longitudinal direction and make the generated CO gas disperse and burn.

The combustion of the generated CO gas can be controlled by adjusting the amount of air which is fed by the air feed rate control apparatus. To control the combustion, it is possible to measure the ambient temperature inside of the internal heat type rotary kiln and temperature of the carbon-containing shaped materials between the two rotary kilns and to use the measured temperatures as the basis to control a control valve which is set at the air feed pipe so as to control the combustion. The specific method of combustion control is not particularly limited. For example, it is possible to perform control in a direction strengthening the combustion (direction increasing the feed rate of air) when the measured temperature is lower than the preset temperature and in a direction weakening the combustion (direction decreasing the feed rate of air) when the measured temperature is higher than it. Further, it is possible to use the temperatures which are measured at a plurality of locations as the basis to compare the distribution of temperature and preset distribution of temperature and control the combustion (that is, the amount of feed air).

When combustion of the generated CO gas alone is insufficient, it is also possible to feed the combustible fuel gas (combustible gas) inside a single closed space. However, the inside gas flows from the external heat type rotary kiln toward the internal heat type rotary kiln, so it is necessary to feed air at the upstream side of the flow of gas at the location where combustion is desired. For example, it is possible to feed it at the external heat type rotary kiln end part or the intermediate connecting part. In the same way as the amount of air, it is possible to measure the ambient temperature inside of the internal heat type rotary kiln or the temperature of the carbon-containing shaped materials between the two rotary kilns and use the measured temperature as the basis to control the feed rate of the combustible gas so as to control the combustion. The specific method of control of combustion is not particularly limited. For example, it is possible to perform control in a direction strengthening the combustion (direction increasing the feed rate of combustible gas) when the measured temperature is lower than the preset temperature and in a direction weakening the combustion (direction decreasing the feed rate of combustible gas) when the measured temperature is higher than it. Due to these combustion control methods, it becomes possible to deal with various conditions and possible to secure flexibility of operations.

The combustion exhaust gas (mainly $CO_2$) of the external heating furnace burners of the external heating furnace of the external heat type rotary kiln is a sufficiently high temperature (about 1200°C). For this reason, to recover the sensible heat of this combustion exhaust gas, it is desirable to feed the combustion exhaust gas of the external heating furnace burner into the closed space. For example, it is sufficient to introduce it from the external heat type rotary kiln end part to the inside of the heating and reduction apparatus. When the external heating furnace of the external heat type rotary kiln is an electrical furnace, no combustion exhaust gas is generated, so, for example, it is possible to provide at least one of the external heat type rotary kiln or intermediate connecting part with a extra burner which burns the combustible gas and to introduce the combustion exhaust gas of the extra burner to the inside of the heating and reduction apparatus.

Ancillary Apparatuses

As the ancillary apparatuses of the heating and reduction apparatus, there are a carbon-containing shaped material charging apparatus, finished product discharge apparatus, and exhaust apparatus.

The carbon-containing shaped material charging apparatus is comprised of means for charging carbon-containing shaped materials to the inside of the internal heat type rotary kiln in the heating and reduction apparatus. To separate the inside of the closed space from the outside air, the carbon-containing shaped material charging apparatus preferably is made a structure whereby outside air does not enter. For example, it is desirable to make the hopper a two-stage type, make the carbon-containing shaped materials move in the individual hopper stages while operating a valve, and thereby prevent outside air from directly entering them.

The finished product discharge apparatus is comprised of means for discharging reduced carbon-containing shaped materials from the external heat type rotary kiln in the heating and reduction apparatus. This is also, like the carbon-containing shaped material charging apparatus, structured so that outside air cannot directly enter the closed space. For example, it is desirable to make the hopper a two-stage type, make the carbon-containing shaped materials move in the individual hopper stages while operating a valve, and thereby prevent outside air from directly entering them.

The exhaust apparatus is comprised of an exhaust means for sucking the gas inside of the heating and reduction apparatus. To guide the generated CO gas to the inside of the internal heat type rotary kiln, the exhaust operation is preferably performed from the internal heat type rotary kiln. Preferably, the exhaust operation is performed from an end part of the internal heat type rotary kiln (side opposite to external heat type rotary kiln). The fact that the gas inside of the internal heat type rotary kiln is exhausted to the outside naturally means that the gas (exhaust gas) inside of the closed space is exhausted to outside of the closed space. Further, that closed space is comprised of the internal heat type rotary kiln and the external heat type rotary kiln arranged in series, so the exhaust gas runs from the external heat type rotary kiln to the internal heat type rotary kiln and is exhausted to the outside. The exhaust apparatus has at least a dust collector and blower. From the environmental perspective of the dust inside of the exhaust gas not being released into the atmosphere or from the viewpoint of protection of the equipment of preventing the wear of the blower due to the dust, preferably a dust collector is used to trap the dust in the exhaust gas.

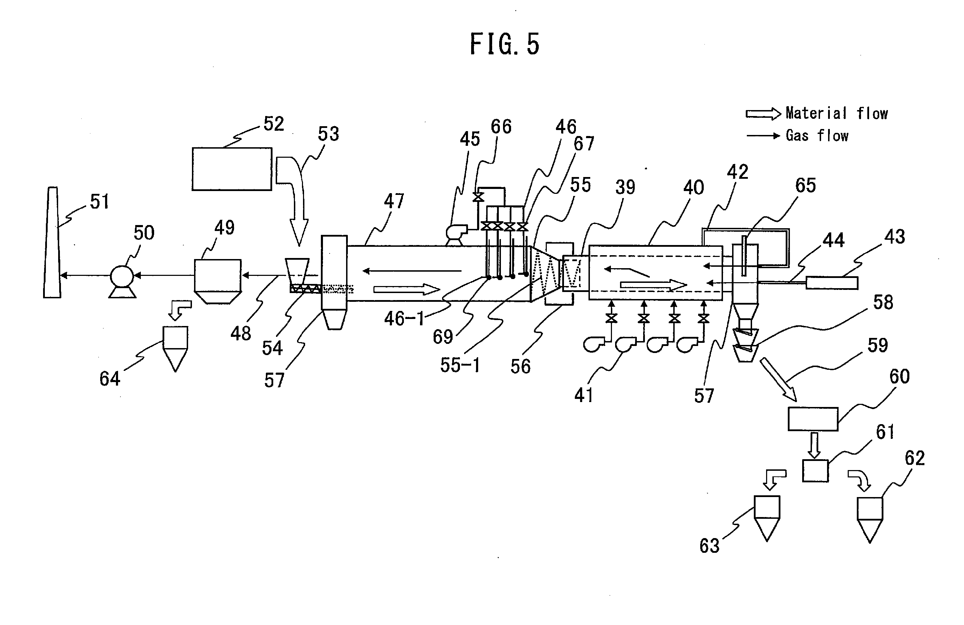

FIG. 5 shows one example of an embodiment of the present invention. The example of FIG. 5 will be used to explain the present invention. Note that, the present invention is not limited to the embodiment which is explained below. All embodiments which satisfy the specific matter required for the present invention are included in the technical scope of the present invention needless to say.

The example which is shown in FIG. 5 uses the heat treatment front stage internal heat type rotary kiln 47 as a carbon-containing shaped material drying-preheating furnace and uses the back stage external heat type rotary kiln 39 as a carbon-containing shaped material reducing furnace. FIG. 5 is an example which arranges and connects these two rotary kilns in series. Usually, the two rotary kilns differ in diameter, so between them a frustoconical shape intermediate connecting part 55 is inserted to connect the two rotary kilns. The two rotary kilns 39 and 47 and intermediate connecting part 55 may be structures which can rotate independently or one of the rotary kilns may be an integral structure. In FIG. 5, the intermediate connecting part 55 is made integral with the large diameter internal heat type rotary kiln 47, and one end of the intermediate connecting part 55 is arranged so as to stick into the inside of the small diameter external heat type rotary kiln 39. The intermediate connecting part 55 and the external heat type rotary kiln 39 are connected through a heat resistant seal (not shown). To raise the separation from the outside air, a kiln connecting hood 56 is set to cover that connecting part. The kiln connecting hood 56 and the two rotary kilns 47 and 39 may be connected by heat resistant seals (not shown). Further, by setting kiln end hoods 57 at the end parts of the two rotary kilns and providing heat resistant seals (not shown) with the rotary kilns, it is possible to raise the separation from the outside air. Due to these, the insides of the internal heat type rotary kiln 40, intermediate connecting part 55, and external heat type rotary kiln 39 form a single closed space.

The two rotary kilns can rotate independently. This is because the treatment times of the carbon-containing shaped materials in the respective rotary kilns are determined by the moisture content of the carbon-containing shaped materials which are charged and the air temperature, humidity, and other factors. Further, the internal heat type rotary kiln and the external heat type rotary kiln are preferably arranged so that their axes of rotation are on the same line. This is because by doing this, rotation is possible so that the connecting part which is positioned so as to enter one end of the external heat type rotary kiln and the external heat type rotary kiln always become the same in positional relationship.

Method of Production

Next, the example of FIG. 5 will be used to explain the method of production of reduced iron in the present invention. In FIG. 5, the material flow is shown by white arrows, while the gas flow is shown by solid line arrows.

First, the material flow will be explained. The carbon-containing shaped materials 53 which are produced by the above-mentioned carbon-containing shaped material manufacturing step 52 and which are adjusted to a moisture content of 20 to 25% are charged from the end part of the internal heat type rotary kiln 47 to the inside of the rotary kiln by the carbon-containing shaped material charging apparatus 54. At this time, the inside pressure of the internal heat type rotary kiln 40 is maintained at a negative pressure (compared with atmospheric pressure) while charging them. The charged carbon-containing shaped materials tumble inside of the rotary kiln due to the slant of the rotary kiln (while not shown, usually has a slant of about 3 to 4% (slant of 3 to 4 mm in vertical direction with respect to 100 mm in horizontal)) and the rotation (usually 2 to 10 rpm so so). During that time, the shaped materials are dried and preheated by the high temperature combustion exhaust gas. After that, the carbon-containing shaped materials pass through the intermediate connecting part 55 and are conveyed to the external heat type rotary kiln 39. The joined part 55 which is shown in FIG. 5 is structured joined with the internal heat type rotary kiln 47 and rotating integrally with it. At the inside surface of the intermediate connecting part 55, a ribbon shaped steel material (spiral sheet) for conveying the carbon-containing shaped material is set in a spiral manner. The carbon-containing shaped material can be conveyed by rotation of the intermediate connecting part. Note that, the internal heat type rotary kiln is provided with a refractory lining so as to be able to withstand high temperature combustion exhaust gas.

In the example which is shown in FIG. 5, the external heat type rotary kiln has the function as a reducing furnace for the carbon-containing shaped materials. The dried and preheated carbon-containing shaped materials which were conveyed to the upstream side of the external heat type rotary kiln 39 tumble to the downstream side while being heated due to the slant (not shown) and rotation of the external heat type rotary kiln whereby the reduction reaction of the iron oxide in the carbon-containing shaped materials proceeds and reduced iron is produced. The reduction reaction of the carbon-containing shaped materials proceeds as shown by formula 1 and formula 2 due to the endothermic reaction between the iron oxide and carbon. For this reason, the amount of heat which is required for causing an endothermic reaction is supplied from the external heating furnace burner 41 which is set at the rotary kiln external heating furnace 40. The inside temperature of the external heat type rotary kiln at this time reaches 1000°C.

The generated reduced iron is discharged from a finished product discharge apparatus constituted by a kiln end hood 57, which is set at the end part of the reducing furnace constituted by the external heat type rotary kiln 39, through a double damper 58. The object of use of the double damper is to maintain the negative pressure inside the rotary kiln. During this time, the amount of heat which is required for causing an endothermic reaction is supplied from the external heating furnace burner 41 which is set at the rotary kiln external heating furnace 40.

The external heat type rotary kiln 39 is made of heat resistant cast steel. Welding short tubes produced by centrifugal casting enables production of a kiln of the required length. As the material of the heat resistant cast steel, for example, KHR48N (27Cr-47Ni-5W): maximum usage temperature 1200°C (Kubota) can be used.

Note that, in the above explanation, the rotary kiln external heating furnace 40 was introduced as one which is provided with an external heating furnace burner 41, but the invention is not particularly limited to this. An electrical furnace may also be used. When using an electrical furnace for the external heating furnace, the controllability of the amount of heating based on the internal temperature is improved compared with heating by a burner. On the other hand, as explained later, the exhaust gas which is generated in the case of an external heating furnace burner cannot be reutilized for heating the inside of the rotary kiln, so when making the external heating furnace an electrical furnace, a extra burner or other heating means becomes necessary for heating the inside of the rotary kiln.

The produced reduced iron 59 is cooled by a reduced iron cooling apparatus 60, then separated by a vibrating screen and stored in a screen top product hopper 62 and screen bottom product hopper 63. The screen top product is used in a blast furnace or steelmaking preliminary treatment furnace, while the screen bottom product is used as a sintering material or is returned as a material to the carbon-containing shaped material manufacturing step 52.

Next, the flow of gas inside the rotary kiln (gas flow) will be explained. As explained above, the external heat type rotary kiln 39 and the internal heat type rotary kiln 47 are arranged in series. These form a single closed space. The gas in this closed space (kiln exhaust gas) is sucked in from the carbon-containing shaped material charging apparatus 54 side of the internal heat type rotary kiln 47 by the exhaust apparatus. The exhaust apparatus has a dust collector 49 which collects the dust in the kiln exhaust gas, an exhauster (blower) 50 which sucks in the exhaust gas, and a smokestack 51 for finally releasing the kiln exhaust gas into the atmosphere.

Due to this exhaust apparatus, the generated CO gas flows in a direction opposite to the material flow, that is, from the inside of the external heat type rotary kiln toward the inside of the internal heat type rotary kiln. The ignition point of the CO gas is 609°C, while the explosive limit in the air is 12.5 to 74%. The generated CO gas is a 800 to 1000°C high temperature gas, so if mixed with oxygen, combustion is possible. Inside the closed space, air is blocked, so if supplying air (oxygen) from the outside, it is possible to burn the gas at the feed point. Further, it is possible to control the combustion by the amount of air which is fed.

In FIG. 5, inside of the internal heat type rotary kiln 47, a plurality of air feed pipes 46 are arranged for feeding air from the outside. The air is supplied from an air feed blower 45 which is set fixed in the rotary kiln through the air feed pipes 46. The feed rate is controlled by the air feed rate control apparatus. In the fuel balance, sometimes the generated CO gas is not enough, so combustible gas 44 (for example, coke oven gas (CO gas) or liquefied petroleum gas) can be fed from the outside through the fuel blowing apparatus 43 to the inside of the rotary kiln.

The insides of the internal heat type rotary kiln 47 and external heat type rotary kiln 39 have to be maintained at negative pressure in order to prevent leakage of CO gas to the outside. Further, to prevent the entry of air from the atmosphere, at the end parts of the kilns, kiln end hoods 57 which are provided with seal mechanisms are set. Further, a kiln connecting part hood 56 is set between the two rotary kilns for similar purposes. Due to this, the hermetic property of the closed space which is formed by the two rotary kilns is maintained, the inside becomes a negative pressure, and leakage of generated CO gas to the outside can be prevented.

In the case of FIG. 5, the internal heat type rotary kiln 47 and the intermediate connecting part 55 form an integral structure, so the kiln connecting part hood 56 is provided so as to cover the connecting part of the intermediate connecting part 55 and the external heat type rotary kiln 39. Note that, the air pressure inside of the external heat type rotary kiln may be detected by a manometer 65 and the speed of a blower 50 which is provided with a speed control function may be controlled so that the internal air pressure becomes 1 to 10 mmHPa lower than the atmospheric pressure.

Further, the external heating furnace burner combustion exhaust gas 42 of the external heating furnace 40 may be introduced into the rotary kiln by the downstream side end part hood 57 of the external heat type rotary kiln 39. This is because the external heating furnace burner combustion exhaust gas is a high temperature which exceeds 1200°C and the sensible heat of the combustion exhaust gas can also be utilized.

Note that, as explained above, when using an electrical furnace etc. for the external heating furnace 40, combustion exhaust gas is not generated, so the heat source inside of the rotary kiln sometimes is insufficient. In this case, it is sufficient to separately set a extra burner which burns combustible gas at the downstream side end part hood 57 or intermediate connecting part of the external heat type rotary kiln 39 and as necessary introduce high temperature combustion exhaust gas to the inside of the heating and reduction apparatus.

Inside of the internal heat type rotary kiln 47, the combustion exhaust gas which is produced by combustion of the generated CO gas and the fed air becomes a high temperature over 1000°C. The direction of movement of the carbon-containing shaped materials 53 (mass flow) and the gas flow face each other, so heat is exchanged between the combustion exhaust gas and carbon-containing shaped materials, and the carbon-containing shaped materials dry and are preheated up to a temperature of over 900°C. Due to this heat exchange, the combustion exhaust gas inside of the rotary kiln falls in temperature to 150 to 200°C and is released into the atmosphere by the above-mentioned exhaust apparatus.

In the external heating furnace 40, a plurality of external heating furnace burners 41 and a plurality of kiln surface thermometers (not shown) are set along the longitudinal direction of the external heat type rotary kiln 39. The combustions of the individual external heating furnace burners are controlled so that the temperatures of the plurality of kiln surface thermometers fall within a preset temperature range. Further, as explained above, the external heating furnace combustion exhaust gas 42 is introduced into the external heat type rotary kiln 39. Due to this, it is possible to use the sensible heat of the combustion exhaust gas 42 to heat the carbon-containing shaped materials 53 from the inside of the kiln and possible to perform heat treatment more efficiently than the case of just external heating by an external heating furnace.

Next, consider the heat balance. When successively drying, preheating, and reducing the carbon-containing shaped materials 53 as in the present invention, the main heat outputs (amounts of consumed heat and amounts of heat taken out to the outside) are the five types of the amount of drying heat, the amount of preheating heat, the amount of reducing heat, the amount of heat dissipated from the individual rotary kilns, and the amount of heat discharged due to the sensible heat of the exhaust gas 48 of the drying and preheating furnace. On the other hand, as the heat inputs (amount of charged heat), there are the three types of the amount of heat due to combustion at the external heating furnace burner 41, the amount of heat due to combustion of the CO gas which is generated due to the reduction of the carbon-containing shaped materials 53 in the external heat type rotary kiln 39 (generated CO gas), and, furthermore, the amount of heat due to the combustible fuel (combustible gas) which is blown in for causing combustion inside the internal heat type rotary kiln.

As the combustible gas 44, CO gas, LNG (liquefied natural gas), LPG (liquefied petroleum gas), or other gaseous fuel or kerosene, heavy oil, or other liquid fuel may be used. It is possible to use a thermometer (not shown) which is set at an outlet of the downstream side of the internal heat type rotary kiln (discharge side of carbon-containing shaped materials) or intermediate connecting part to measure the temperature of the carbon-containing shaped materials 53 and control the amount of fuel 44 blown in so that this meets within a preset temperature range.

At the downstream side (discharge side of carbon-containing shaped materials) end part of the internal heat type rotary kiln 47, a frustoconical shaped intermediate connecting part 55 forms an integral structure. The front end part of the intermediate connecting part 55 is cylindrical in shape and is structured for insertion inside the external heat type rotary kiln 39. Further, at the inside surface of the intermediate connecting part, a spiral sheet 55-1 is provided. By adopting such a structure, it is possible to convey carbon-containing shaped materials continuously to the external heat type rotary kiln. As the material of the spiral sheet 55-1, it is possible to use heat resistant cast steel the same as the material of the external heat type rotary kiln 39.

At the internal heat type rotary kiln 47, air feed equipment is arranged. The air blower 45 of the air feed equipment is set fastened to the outside surface of the internal heat type rotary kiln. The air feed equipment is comprised of an air blower 45, a plurality of air feed pipes 46, a main valve for control of air flow rate 66 which is arranged before the air blower, and air flow rate control valves 67 which are arranged at the air feed pipes. The air blower 45 can, for example, be supplied with electric power through a collector ring (not shown).

The front ends of the air feed pipes 46 (air feed ports 46-1) are inserted inside of the internal heat type rotary kiln. The furnace inside side has refractory lining placed at its outside and is provided with a refractory nature. At the portions of the air feed pipes 46 which are inserted inside of the rotary kiln, thermometers 69 are attached for detecting the gas temperature. The reason why a plurality of air feed pipes 46 are set at the internal heat type rotary kiln 47 in the longitudinal direction is that if burning a mixed gas 71 of combustible gas and reduced exhaust gas at a single location all at once, there will be the problem that high temperature combustion exhaust gas will be generated and the upper limit of usage temperature of the refractory lining 70 of the internal heat type rotary kiln and the carbon-containing shaped material conveyor screw 55 will be exceeded or the carbon-containing shaped materials will end up melting, so combustion is performed dispersed.

By using the thermometers 69 for detecting gas temperature to detect the gas temperature of the inside of the internal heat type rotary kiln 47 and controlling the air flow rate control valve 67 which is set at the air feed pipe 46 so that the temperatures of the thermometers meet in a preset temperature range, it is possible to control the state of combustion of the mixed gas 71 of the combustible gas and exhaust gas in the longitudinal direction of the internal heat type kiln. Further, by continuously detecting the CO concentration in the drying-preheating furnace exhaust gas 48 and controlling the amount of air blown from the air feed pipes at the upstream-most side of the internal heat type kiln, it is also possible to maintain the CO concentration at 0%. This series of steps can be controlled by the air feed rate control apparatus.

The metric for control of the blowing rate of the combustible gas which is blown into the external heat type rotary kiln is the value of a thermometer for detecting the carbon-containing shaped material preheating temperature (not shown). The thermometer may be set at the spiral sheet 55-1 at the inside surface of the intermediate connecting part inside surface. This thermometer may be used to measure the temperature of the carbon-containing shaped materials and the amount of combustible gas 44 blown in may be controlled so that the temperature meets within a preset temperature range. As the thermometers 69 for detecting the gas temperature and the thermometer for detecting the carbon-containing shaped material preheating temperature, thermocouples may be used. To transmit the thermoelectromotive force of a thermocouple which is fastened to the rotating internal heat type rotary kiln 47 to a thermoelectromotive force measuring device which is set on the ground, it is possible to use a device similar to the collector ring for feeding power to the blower 45.

Examples

Example 1

Below, the present invention will be explained by examples obtained by a test plant. Table 1 shows the chemical components of non-oxidative cured products which were obtained by drying converter sludge which was used in a later explained test operation in a $N_2$ stream. The M-Fe was a considerably high 19.2%. The distribution of particle size of this converter sludge was measured by a laser diffraction and scattering type particle size distribution measuring apparatus (microtrack) and was found to be D10=0.5 $\mu$m, D50=1.4 $\mu$m, and D90=3.6 $\mu$m. As explained above, D50 means the particle size where the cumulative frequency from the fine particles corresponds to 50% in the cumulative particle size distribution. Similarly, D10 means the particle size where the cumulative frequency from the fine particles corresponds to 10%, D90 means the one which it corresponds to 90%.

Table 1

| | T·Fe | M·Fe | FeO | $Fe_2O_3$ | C | Zn |
|---|---|---|---|---|---|---|
| Dried product of converter sludge in $N_2$ stream (mass%) | 70.4 | 19.2 | 64.7 | 1.21 | 4.76 | 1.81 |

Table 2 shows the mixing ratio of the material of the carbon-containing shaped materials which was used for the later explained test and the mixed material moisture content (same as carbon-containing shaped material moisture content). As the carbonaceous material, powdered coke is added to give a C equivalent of 1.0, quick lime for adjustment of the moisture content and a binder constituted by corn starch are added and mixed well by a twin screw kneader, then 15 mm$\phi\times$20 mmL shaped materials are produced by an extruder. The moisture content of the converter sludge was 25.1%, but quick lime: 4.0% was added, so the carbon-containing shaped material moisture content (mixed material moisture content) fell to 20.3%. The distribution of the particle size of the powdered coke was D10=10.1 $\mu$m, D50=38.8 $\mu$m, and D90=102.1 $\mu$m.

Table 2

| Name of material | Converter sludge | Powdered coke | Quick lime | Corn starch | Total | Mixed material moisture content (%) |
|---|---|---|---|---|---|---|
| Mixing ratio (%) | 86.1 | 6.9 | 4.0 | 3.0 | 100 | 20.3 |
| Moisture content (%) | 25.1 | 6.0 | 0 | 0 | - | |

The above-mentioned carbon-containing shaped materials were used to perform tests at a test plant explained below:

Specifications of Equipment of Test Plant

The test apparatus, as shown in FIG. 7(c), is structured by an internal heat type rotary kiln and an external heat type rotary kiln arranged in series and sandwiching a fixed type intermediate connecting part. The specifications of the equipment are shown below:

Internal heat type rotary kiln:

Outside diameter 812 mm×inside diameter 500 mm×length 4 m.
Insulating castable 50 mm, refractory castable 100 mm.
Total weight of castable about 3t.

External heat type rotary kiln:

Made of heat resistant cast steel, inside diameter 300 mm×length 4 m, maximum usage temperature 1100°C.
External heating furnace: Electrical heating type, total length 2 m, comprised of four electric furnaces of lengths of 0.5 m

Each electric furnace able to be individually temperature controlled so that temperature of corresponding kiln surface thermometer becomes set value. Intermediate connecting part:

Lined by insulating/refractory castable. Slant angle of bottom surface 45 degrees.
Structured so that preheated carbon-containing shaped materials easily slide down from internal heat type kiln to external heat type kiln.

Other ancillary equipment:

Carbon-containing shaped material charging apparatus, discharge apparatus of reduced shaped materials, exhaust apparatus (apparatus for exhausting gas inside of internal heat type rotary kiln), and air feed apparatuses of internal heat type rotary kiln (three blower pipes every 700 mm from internal heat type rotary kiln outlet side) of equivalent types to those shown in FIG. 5 installed.

To preheat the inside of the internal heat type rotary kiln before the start of the test and make up for the dissipation of heat from the kiln during the test, a natural gas-fired burner was set at the intermediate connecting part.

Test Method

The following procedure was used for the test.

(1) The natural gas-fired burner set at the intermediate connecting part was operated (air ratio 1.0) to preheat the internal heat type rotary kiln to a temperature of the heat resistant castable outlet of 900°C.

(2) The above-mentioned carbon-containing shaped materials (15 mm$\phi$×20 mm, moisture content 20%, bulk specific gravity 1.5) were charged and the operation of the natural gas-fired burner was controlled so that the carbon-containing shaped materials were dried and heated and the temperature at the time of discharge from the internal heat type rotary kiln became 900°C. This was because 900°C was selected as the maximum temperature under conditions not generating CO gas due to a reduction reaction.

(3) At the same time as when the carbon-containing shaped materials started being charged into the internal heat type rotary kiln, the power of the external heating furnace of the external heat type rotary kiln was turned on and the external heat type rotary kiln was raised to a predetermined reduction treatment temperature. The reduction reaction of the carbon-containing shaped materials was an endothermic reaction, so the relationship between the shaped materiale temperature and temperature setting of the electrical furnace was found in advance and the temperature of the electrical furnace was set accordingly. In the usual case, considering the dissipation of heat into the atmosphere, the temperature setting of the electrical furnace may be set higher than the reduction treatment temperature of the shaped materials.

(4) The treatment speeds and residence times of the internal heat type rotary kiln and the external heat type rotary kiln were adjusted based on the rotary kiln speeds, rotary kiln slants, and occupation ratio of carbon-containing shaped materials at the inside of the rotary kiln. With an internal heat type rotary kiln occupation ratio of 4% and residence time of 1 hour and with an external heat type rotary kiln occupation ratio of 10% and a reduction treatment time (time during which carbon-containing shaped materials passed through 2 m inside of external heat type rotary kiln) of 30 minutes, the speeds and slants of the rotary kilns were adjusted so that the treatment speeds of the carbon-containing shaped materials beaome 45 dry-kg/h for both the internal heat type rotary kiln and the external heat type rotary kiln. Note that, when halving the residence time inside the external heat type rotary kiln, the rotation and slant etc. were adjusted so that the treatment speed remained the same while the occupation ratio became halved.

(5) When the preheated carbon-containing shaped materials reached the external heat type rotary kiln, the reduction reaction caused CO gas to be generated. The CO gas moved to the internal heat type rotary kiln where it was burned by the air which was blown in from the air feed apparatus. A gas burner which was set at the intermediate connecting part was used to burn the combustible gas (here, natural gas) to control the preheating temperature of the carbon-containing shaped material to 900°C. Regarding the amounts of air which were blown in from the air feed pipes, since substantially the entire amount of the C which was contained in the carbon-containing shaped materials in about 10% changed to CO, the amounts required for burning the CO were evenly blown in from the three blower pipes provided. The amount of combustible gas (here, natural gas) necessary for preheating the internal heat type rotary kiln and maintaining the carbon-containing shaped material temperature at the internal heat type rotary kiln outlet at 900°C was balanced at about 5 $Nm^3$/h before the generation of CO and at about 4 $Nm^3$/h after the generation of CO in the case of reduction treatment conditions of 1000°C for 30 minutes.

(6) After the carbon-containing shaped materials passed the external heat type rotary kiln outlet side, to cool the carbon-containing shaped materials to 900°C or less, an $N_2$ blower pipe which was set at the hood at the downstream side of the external heat type rotary kiln was used to spray the surface of the carbon-containing shaped materials with $N_2$. At the same time, the hood at the downstream side of the external heat type rotary kiln was air cooled from the outside.

(7) Seal mechanisms were provided between the internal heat type rotary kiln and intermediate connecting part, the intermediate connecting part and external heat type rotary kiln, and the external heat type rotary kiln and outlet side hood. Furthermore, the seal mechanisms were covered by the hoods, $N_2$ was blown into the hoods, and entry of air was prevented. Due to this, outside air was prevented from entering the closed space formed by the internal heat type rotary kiln, intermediate connecting part, and external heat type rotary kiln.

(8) The internal heat type rotary kiln was preheated for 4 to 5 hours, then started to be charged with the carbon-containing shaped materials. After this, a test was run for continuous operation of 5 hours. Samples of reduced shaped materials were taken several times in an $N_2$ stream from 2 hours after the start of continuous operation to the end of the test. The average values of the analysis values were used as the test data.

Test Level and Test Results

The test levels performed and test results are shown in Table 3.

Table 3

| Test no. | 1 | 2 | 3 | 4 | 5 | 6 | 7 | 8 | 9 | RHF method | Waelz method |
|---|---|---|---|---|---|---|---|---|---|---|---|
| Reduction treatment temperature (°C) | 950 | 980 | 1000 | 1000 | 1000 | 1050 | 1050 | 1100 | 1100 | 1300 | 1200 |
| Reduction treatment time (min) | 40 | 30 | 15 | 20 | 30 | 15 | 30 | 10 | 15 | 10 to 20 | 60 |
| Reduction rate (%) | 45.5 | 66.3 | 61.1 | 75.9 | 90.8 | 78.8 | 91.8 | 82.3 | 94.9 | | |
| Net metallization rate (%) | 37.8 | 55.1 | 50.5 | 63.2 | 76.6 | 67.6 | 77.5 | 70.5 | 77.9 | | |
| Gross metallization rate (%) | 55.7 | 72.9 | 69.4 | 81.5 | 95.0 | 85.7 | 95.2 | 88.1 | 96.6 | 70 to 85 | 88.8 |
| Dezincification rate (%) | 10.3 | 29.1 | 31.9 | 55.2 | 81.6 | 66.8 | 96.2 | 70.6 | 98.7 | 75 to 90 | 96.4 |
| Reduced iron crushing strength (kg/cm²) | 10.5 | 14.1 | 16.2 | 28.4 | 40.6 | 36.1 | 45.5 | 46.7 | 59.0 | | |
| Evaluation | Poor | Fair | Poor | Fair | Good | Fair | Good | Fair | Good | - | - |
| Remarks | Comp. ex. | Inv. ex. | Comp. ex. | Inv. ex. | Inv. ex. | Inv. ex. | Inv. ex. | Inv. ex. | Inv. ex. | Comp. ex. | Comp. ex. |

The net metallization rate is the metallization rate which is increased by the reduction. The gross metallization rate is the total metallization rate of a sample after reduction plus the M·Fe (metallic iron (metallic Fe)) which was originally present in the converter sludge. The gross and net metallization rates are defined in formula 4 and formula 5. Below, T·Fe indicates the total Fe (total iron content), while the wt% of M·Fe and T·Fe show the wt% with respect to the carbon-containing shaped materials.

```
Gross metallization rate =(M·Fe after
reduction(wt%))/(T·Fe after reduction (wt%))(%)...(formula
4)

Net metallization rate ={[(M·Fe after reduction (wt%) ×
total weight of carbon-containing shaped materials after
reduction)-(M·Fe (wt%) before reduction × total weight of
carbon-containing shaped materials before reduction)]
/(total weight after reduction)}/(T·Fe (wt%) after
reduction) (%)... (formula 5)
```

When using reduced iron for a blast furnace, the dezincification rate has to be 75% or more and the crushing strength has to be 40 kg/cm$^2$ or more. On the other hand, when using it in the process of pretreatment of molten pig iron for steelmaking, even if the dezincification rate and the crushing strength are somewhat low, use is sufficiently possible if the gross metallization rate is 70% or more. Therefore, test results enabling use both for a blast furnace and for pretreatment of molten pig iron for steelmaking were evaluated as "Good", while test results enabling use for pretreatment of molten pig iron for steelmaking were evaluated as "Fair". That is, test results of a gross metallization rate of 70% and a dezincification rate of 75% or more and of a crushing strength after reduction of 40 kg/cm$^2$ or more were evaluated as "Good", while test results of a dezincification rate and crushing strength which are not that high, but with a gross metallization rate of 70% or more were evaluated as "Fair".

From the test results, the relationship between the reduction treatment temperature T°C and the residence time (reduction treatment time) H min. in the external heat type rotary kiln is shown in FIG. 6. As will be understood from FIG. 6, it was confirmed that if the relationship between the reduction treatment temperature T°C and the residence time (reduction treatment time) H min. satisfies the following formula, the reduced iron can be used for pretreatment of the molten pig iron for steelmaking:

$$H \geq 120 - 0.1T$$

where, $980 \leq T \leq 1100$

If adding details for reduced iron for a blast furnace, in Test No. 5 which was reduced at 1000°C for 30 minutes, a gross metallization rate of 95.0% and a dezincification rate of 81.6% were obtained. These are values which are comparable to the results of operation by the RHF method where reduction is performed at 1300°C for 10 to 20 minutes and the results of operation by the Waelz method where reduction is performed at 1200°C for 60 minutes. Furthermore, in Test No. 8 which was treated at 1100°C for 15 minutes, both the gross metallization rate and dezincification rate were superior to those of the RHF method and Waelz method.

Due to the limit of the highest usage temperature of external heat type rotary kiln used (heat resistance of equipment), the current tests were only run up to 1100°C, but if performing the reduction treatment at a temperature higher than 1100°C, it can be easily surmised that better results can be obtained in a shorter time. Therefore, the upper limit temperature of the present invention is not limited to 1100°C. If the restrictions in equipment can be eliminated, treatment at a higher temperature is preferable. For the reduction treatment temperature and treatment time, considering the performance of heat resistant cast steel, operating results, capital expenses, treatment costs, etc., any conditions of 980°C or more may be selected.

Example 2

Next, the above test apparatus was used to run tests for production of reduced iron by carbon-containing shaped materials which were produced by converter type pretreatment furnace sludge and electric furnace dust (dust generated at electric type iron melting furnace). Table 4 shows the chemical components of a non-oxidative cured product which was dried in a nitrogen ($N_2$) stream. Table 5 shows the distribution of the particle size of these.

To the above material, a carbonaceous material constituted by powdered coke was added to give a C equivalent of 1.0 (Zn is all ZnO, while the C equivalent for FeO+$Fe_2O_3$+ZnO was 1.0). Using the same method as at the time of Example 1, an extruder was used to produce 15 mm$\phi$×20 mm shaped materials for use for a reduction test. The test conditions were made the same as Test No. 5 of Example 1. The results of the tests are shown in Table 6. These test results confirmed that in each case, the properties of reduced iron by the RHF method (see Table 3), that is, the gross metallization rate of 70% and dezincification rate of 75%, were exceeded.

Table 4

|  | T · Fe | M · fe | FeO | $Fe_2O_3$ | C | Zn |
|---|---|---|---|---|---|---|
| Pretreatment furnace sludge | 59.3 | 6.2 | 52.4 | 17.8 | 4.3 | 2.18 |
| Electric furnace dust | 19.3 | 1.7 | 2.5 | 22.3 | 1.8 | 39.2 |

Table 5

|  | D10 | D50 | D90 |
|---|---|---|---|
| Pretreatment furnace sludge | 0.5 | 2.5 | 7.0 |
| Electric furnace dust | 0.9 | 2.8 | 10.0 |

Table 6

|  | Reduction rate | Gross metallization rate | Dezincification rate |
|---|---|---|---|
| Pretreatment furnace sludge | 86.6 | 86.2 | 88.8 |
| Electric furnace dust | 80.4 | 73.1 | 79.6 |

Industrial Applicability

The present invention enables the production of reduced iron from ironmaking dust at an ironmaking plant, so can be utilized in the ironmaking industry.

Reference Signs List

1        converter fine-grained dust storage tank
2        other dust storage tank
3        powdered coke storage tank
4        binder storage tank
5        ball mill
6        pelletizer
7        dryer
8        charging apparatus
9        rotating hearth type reducing furnace
10       exhaust gas
11       boiler recuperator
12       dust collector
13       smokestack

| 14 | discharge screw |
|---|---|
| 15 | reduced iron cooler |
| 16 | finished product hopper |
| 17 | rotating hearth |
| 18 | Pelletts charged in single layer |
| 19 | burner |
| 20 | ironmaking dust storage tank |
| 21 | carbonaceous material storage tank |
| 22 | belt conveyor |
| 23 | mixer |
| 24 | rotary kiln |
| 25 | inlet side end of rotary kiln |
| 26 | outlet side end of rotary kiln |
| 27 | cooling apparatus |
| 28 | vibrating screen apparatus |
| 29 | screen top material (screen top reduced iron) |
| 30 | screen bottom material (screen bottom reduced iron) |
| 31 | sintering machine |
| 32 | sintered ore |
| 33 | blast furnace |
| 34 | kiln inside feed gas |
| 35 | kiln furnace inside gas |
| 36 | kiln exhaust gas |
| 37 | material |
| 38 | reduced iron |
| 39 | external heat type rotary kiln (reducing furnace) |
| 40 | external heating furnace |
| 41 | external heating furnace burner |
| 42 | external heating furnace combustion exhaust gas feed piping |
| 42-1 | external heating furnace combustion exhaust gas |
| 43 | combustible gas feed apparatus |
| 44 | combustible gas feed piping |
| 44-1 | combustible gas |
| 45 | air blower |
| 46 | air feed pipe |
| 46-1 | air feed port |
| 47 | internal heat type rotary kiln (drying-preheating furnace) |
| 48 | internal heat type rotary kiln exhaust gas |
| 49 | dust collector |
| 50 | blower (exhaust blower) |
| 51 | smokestack |
| 52 | carbon-containing shaped material manufacturing step |
| 53 | carbon-containing shaped material |
| 54 | carbon-containing shaped material charging apparatus |
| 55 | intermediate connecting part |
| 55-1 | spiral sheet (intermediate connecting part inside surface) |
| 56 | kiln connecting part hood |
| 57 | kiln end hood |
| 58 | double damper |
| 59 | reduced iron |
| 60 | reduced iron cooling apparatus |
| 61 | vibrating screen |
| 62 | screen top product hopper |
| 63 | screen bottom product hopper |
| 64 | kiln dust hopper |
| 65 | external heat type rotary kiln internal manometer |
| 66 | main valve for control of air flow rate |
| 67 | air feed rate control valve |

| 69 | thermometer for detecting gas temperature |
| 70 | refractory lining |
| 71 | generated CO gas or mixed gas of combustible gas and generated CO gas |
| 81 | internal heat type rotary kiln |
| 82 | dam ring |
| 83 | burner flame |
| 84 | material |

**Claims**

1. A method of production of reduced iron by reducing ironmaking dust which contains iron oxide, said method of production of reduced iron **characterized by** having
a carbon-containing shaped material manufacturing step which mixes and shapes ironmaking dust which contains iron oxide and a carbonaceous material and binder to produce carbon-containing shaped materials and
a heating and reducing step which heats said carbon-containing shaped materials by an internal heat type rotary kiln, then heats them by an external heat type rotary kiln to produce reduced iron, wherein
said heating and reducing step is treated inside a single closed space which is formed including the insides of the rotary kilns of the internal heat type rotary kiln and external heat type rotary kiln which are arranged in series and gas generated inside said external heat type rotary kiln is burned inside of said internal heat type rotary kiln.

2. The method of production of reduced iron according to claim 1 **characterized in that**, in said heating and reducing step, air is fed from an air feed port which is set at one or two or more locations at the inside of said internal heat type rotary kiln in a longitudinal direction and the gas generated inside of said external heat type rotary kiln is burned.

3. The method of production of reduced iron according to claim 2 **characterized by** performing control so as to increase the amount of air which is fed to the inside of said internal heat type rotary kiln when the temperature at the inside of said internal heat type rotary kiln is lower than a preset temperature and to reduce the amount of air which is fed to the inside of said internal heat type rotary kiln when the temperature at the inside of said internal heat type rotary kiln is higher than a preset temperature.

4. The method of production of reduced iron according to claim 2 or 3 **characterized by** controlling the amount of air which is fed to the inside of said internal heat type rotary kiln through each said air feed port so that a distribution of temperature inside of said internal heat type rotary kiln in the longitudinal direction becomes a preset temperature distribution.

5. The method of production of reduced iron according to any one of claims 1 to 4 **characterized by** feeding combustible gas to inside said closed space.

6. The method of production of reduced iron according to claim 5 **characterized by** performing control so as to increase the amount of feed of said combustible gas when the temperature of the carbon-containing shaped materials at the midpoint between said internal heat type rotary kiln and said external heat type rotary kiln is lower than a preset temperature and to reduce the amount of feed of said combustible gas when the temperature of said carbon-containing shaped materials is higher than a preset temperature.

7. The method of production of reduced iron according to any one of claims 1 to 6 **characterized in that** an external heating furnace of said external heat type rotary kiln has an external heating furnace burner which burns combustible gas and by feeding combustion gas of said external heating furnace burner to the inside of said external heat type rotary kiln.

8. The method of production of reduced iron according to any one of claims 1 to 7 **characterized in that** said ironmaking dust has an average particle size of 3 $\mu$m or less.

9. The method of production of reduced iron according to any one of claims 1 to 8 **characterized in that** said binder is corn starch.

10. The method of production of reduced iron according to any one of claims 1 to 9 **characterized in that** said carbon-containing shaped materials are spherical shapes equivalent to diameters of 10 mm to 30 mm or columnar shapes with diameters of 10 mm to 30 mm and lengths of 10 mm to 30 mm.

11. The method of production of reduced iron according to any one of claims 1 to 10 **characterized in that** in said heating and reducing step, the relationship between the carbon-containing shaped material temperature T°C at the inside of the external heat type rotary kiln and the residence time H minutes satisfies the following formula:

$$H \geq 120 - 0.1T$$

where, $980 \leq T \leq 1100$

12. The method of production of reduced iron according to any one of claims 1 to 11 **characterized in that** said carbon-containing shaped materials are dried and preheated at said internal heat type rotary kiln and are reduced at said external heat type rotary kiln.

13. An apparatus for production of reduced iron by reducing ironmaking dust which contains iron oxide, said apparatus for production of reduced iron **characterized by** having
a carbon-containing shaped material manufacturing apparatus which mixes and shapes ironmaking dust which contains iron oxide and a carbonaceous material and binder to produce carbon-containing shaped materials,
a heating and reducing apparatus which has an internal heat type rotary kiln and external heat type rotary kiln which are arranged in series, is formed with a single closed space which includes the insides of the rotary kilns, and further which has air feeding means for feeding air to the inside of said internal heat type rotary kiln,
a carbon-containing shaped material charging apparatus which has means for charging said carbon-containing shaped materials to the inside of said internal heat type rotary kiln,
a finished product discharge apparatus which has means for discharging the reduced carbon-containing shaped materials from said external heat type rotary kiln, and
an exhaust apparatus which sucks in the gas at the inside of said internal heat type rotary kiln.

14. The apparatus for production of reduced iron according to claim 13 **characterized in that** said air feeding means has an air feed port which is arranged at one or two or more locations of the internal heat type rotary kiln in the longitudinal direction.

15. The apparatus for production of reduced iron according to claim 13 or 14 **characterized in that** said heating and reduction apparatus has means for measuring the temperature at the inside of said internal heat type rotary kiln and has an air feed rate control apparatus which performs control to increase the amount of air which is fed by said air feeding means when the measured temperature is lower than a preset temperature and to reduce the amount of air which is fed by said air feeding means when the measured temperature at the inside of said internal heat type rotary kiln is higher than a preset temperature.

16. The apparatus for production of reduced iron according to claim 13 or 14 **characterized in that** furthermore said heating and reduction apparatus has means for measuring a distribution of temperature at the inside of said internal heat type rotary kiln in the longitudinal direction and has an air feed rate control apparatus which controls the amount of air which is fed by said air feeding means so that the measured distribution of temperature in the longitudinal direction becomes a preset distribution of temperature in the longitudinal direction.

17. The apparatus for production of reduced iron according to any one of claims 13 to 16 **characterized in that** said internal heat type rotary kiln and said external heat type rotary kiln are arranged sandwiching an intermediate connecting part.

18. The apparatus for production of reduced iron according to claim 17 **characterized in that** axes of rotation of said internal heat type rotary kiln and said external heat type rotary kiln are arranged on the same line, said intermediate connecting part and said internal heat type rotary kiln are an integral structure, one end of said intermediate connecting part is inserted at the inside of said external heat type rotary kiln, and a sheet is arranged in a spiral shape at the inside surface of said intermediate connecting part.

19. The apparatus for production of reduced iron according to any one of claims 13 to 18 **characterized in that** in said heating and reduction apparatus, an external heating furnace of said external heat type rotary kiln has an external heating furnace burner which burns combustible gas and has means for introducing combustion exhaust gas of said external heating furnace burner to the inside of said external heat type rotary kiln.

20. The apparatus for production of reduced iron according to any one of claims 13 to 19 **characterized in that** in said heating and reduction apparatus, at least one of said external heat type rotary kiln or intermediate connecting part has a combustible gas feeding means for feeding combustible gas.

21. The apparatus for production of reduced iron according to any one of claims 13 to 18 **characterized in that** in said heating and reduction apparatus, the external heating furnace of said external heat type rotary kiln is an electrical furnace.

22. The apparatus for production of reduced iron according to claim 21 **characterized in that** in said heating and reduction apparatus, at least one of said external heat type rotary kiln or intermediate connecting part has an extra burner which burns combustible gas and has means for introducing said combustion exhaust gas of said extra burner at the inside of said heating and reduction apparatus.

23. The apparatus for production of reduced iron according to any one of claims 13 to 22 **characterized in that** said exhaust apparatus has a dust collecting apparatus and blower.

# FIG. 1
## (Prior Art)

# FIG. 2
(Prior Art)

# FIG. 3
(Prior Art)

# FIG. 4

| Carbonaceous material | Ironmaking dust | Quick lime | Binder |
|---|---|---|---|

↓ ↓ ↓ ↓

→ **Mixer**

↓

**Extruder**

↓

undersized | **Screening machine**

↓

**Carbon-containing shaped material**

# FIG. 5

⇨ Material flow
→ Gas flow

# FIG. 6

# FIG. 7

(a)

(b)

(c)

FIG. 8

## INTERNATIONAL SEARCH REPORT

International application No.

PCT/JP2013/052615

### A. CLASSIFICATION OF SUBJECT MATTER
*C21B13/08*(2006.01)i, *C22B1/16*(2006.01)i, *C22B1/244*(2006.01)i, *C22B1/248* (2006.01)i, *F27B7/02*(2006.01)i, *F27B7/08*(2006.01)i, *F27B7/10*(2006.01)i, *F27B7/34*(2006.01)i, *F27B7/36*(2006.01)i
According to International Patent Classification (IPC) or to both national classification and IPC

### B. FIELDS SEARCHED

Minimum documentation searched (classification system followed by classification symbols)
C21B13/08, C22B1/16, C22B1/244, C22B1/248, F27B7/02, F27B7/08, F27B7/10, F27B7/34, F27B7/36

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 6-501055 A (Mannesmann AG.), 03 February 1994 (03.02.1994), entire text & JP 2972796 B  & US 5395463 A & EP 549656 A  & WO 1992/005001 A1 & DE 4030054 A  & DE 59103928 C & CA 2087850 A  & RU 2077970 C & CA 2087850 A1 | 1-23 |
| A | JP 2002-206120 A (Nippon Steel Corp.), 26 July 2002 (26.07.2002), entire text & US 2004/0020326 A1  & US 2010/0294079 A1 & EP 1338660 A1  & WO 2002/036836 A1 & DE 60138725 D  & AU 1097902 A & CA 2427521 A  & TW 565617 B & CN 1473204 A | 1-23 |

[X] Further documents are listed in the continuation of Box C.      [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 April, 2013 (16.04.13) | 23 April, 2013 (23.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/052615

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-19505 A   (Taiheiyo Cement Corp.), 23 January 2001 (23.01.2001), entire text (Family: none) | 1-23 |
| A | JP 2010-12409 A   (Hiroshima Gas Techno Kabushiki Kaisha), 21 January 2010 (21.01.2010), entire text (Family: none) | 1-23 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5110166A B
- JP 2003089823 A
- JP 2010007163 A

### Non-patent literature cited in the description

- **G. KOSHIHIRA ; Y. AMINAGA ; Y. KAWAGUCHI ; M. YARIYAMA ; A. MIYAMOTO.** *CAMP ISIJ,* 1997, vol. 10, 36-39
- *NSC Technical Reports, No. 376,* 2002
- Making New Materials From Slag and Dust and New Developments. *5th Nishiyama Commemorative Course,* June 2011, 94
- *NSC Technical Reports No. 376,* 2002
- *Tetsu to Hagane,* 1978, vol. 64, A103